(19) **Europäisches Patentamt**

**European Patent Office**

**Office européen des brevets**

(11) **EP 0 872 489 A2**

## (12) EUROPÄISCHE PATENTANMELDUNG

(43) Veröffentlichungstag:
21.10.1998 Patentblatt 1998/43

(51) Int. Cl.$^6$: **C08B 15/06**

(21) Anmeldenummer: 98102200.7

(22) Anmeldetag: 09.02.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **15.04.1997 DE 19715617**

(71) Anmelder:
- **Zimmer Aktiengesellschaft**
  **D-60388 Frankfurt (DE)**
- **Instytut Wlokien Chemicznych**
  **90-570 Lodz (PL)**

(72) Erfinder:
- **Keunecke, Gerhard**
  **50259 Pulheim (DE)**
- **Struszczyk, Henryk**
  **95-100 Zgierz (PL)**
- **Mikolajczyk, Wlodzimierz**
  **90-629 Lodz (PL)**
- **Urbanowski, Alojzy**
  **92-015 Lodz (PL)**
- **Starostka, Pawel**
  **93030 lodz (PL)**

(74) Vertreter:
**Fechner, Joachim, Dr.-Ing.**
**Im Broeltal 118**
**53773 Hennef (DE)**

(54) **Verfahren für die modifizierte Herstellung von Cellulosecarbamat**

(57) Verfahren zur Herstellung von Cellulosecarbamat, wobei der Zellstoff einer vorhergehenden Aktivierung durch alkalische, hydrothermische und/oder enzymatische Behandlung unterworfen wird, danach der aktivierte Zellstoff mit einer wäßriger Harnstofflösung gemischt und das Wasser der Lösung mit einem organischen Reaktionsträger ausgetauscht wird, und die Cellulose dann mit dem Harnstoff in flüssiger Phase zur Reaktion gebracht und das entstandene Cellulosecarbamat vom flüssigen Medium abgetrennt und gewaschen wird.

EP 0 872 489 A2

**Beschreibung**

Die Erfindung bezieht sich auf ein modifiziertes Verfahren zur Synthese von Cellulosecarbamat in flüssiger Phase unter Verwendung von wirksam aktivierten Ausgangszellstoffen. Das Verfahren ist bei der Herstellung von Cellulosefasern, Filmen und anderen Produkten von Nutzen.

Es ist bekannt, daß man für die Herstellung von Celluloseregeneratprodukten, Cellulosecarbamat als lösliche Celluloseverbindung anstelle von Cellulosexanthogenat verwendet, weil Xanthogenat wegen seiner Toxizität und leichten Brennbarkeit problmematisch ist, was zu immer strengeren Umweltauflagen führt.

Cellulosecarbamat erhält man durch Erhitzen einer homogenen Mischung von Cellulose und Harnstoff bei einer Temperatur von über 110 °C, entweder in Abwesenheit eines flüssigen Mediums (US-Patent 2 134 825, EP-Patent 57 105, EP-Patentanmeldung 402 707) oder in Gegenwart einer inerten organischen Flüssigkeit (EP-Patent 97 685, US-Patent 5 378 827). Im Festphasen-Verfahren kann die Cellulose-/Harnstoffmischung einen Biuretgehalt, bezogen auf Cellulose, von 3 bis 50 Gew.% enthalten. Die bekannten Verfahren zur Herstellung von Cellulosecarbamat, sowohl in fester als auch in flüssiger Phase, berücksichtigen ungenügend die gleichmäßige Verteilung und Substitution der Carbamatgruppen in der Cellulosekette, wodurch das Löslichkeitsverhalten, die Lösungseigenschaften, die Spinnbarkeit des Cellulosecarbamats und die Eigenschaften der regenerierten Produkte beeinflußt werden. Ist weiterhin die Verteilung des Harnstoffes, eingeschoben in die Cellulosestruktur, nicht gleichmäßig genug, werden die Eigenschaften des Cellulosecarbamates negativ beeinflußt, insbesondere die Löslichkeit als auch die Stabilität und Spinnbarkeit der Lösung.

Für den Festphasen-Cellulosecarbamat-Prozeß wurden verschiedene Verfahren zur Vorabaktivierung des Zellstoffes vorgeschlagen, z. B. mit Ammoniak (Polnisches Patent 160 863), mit anorganischen oder organischen Salzen (US-Patent 2 134 825, Polnische Patente 160 866 und 163 049), mit Alkalihydroxid (US-Patent 2 134 825), welches anschließend ausgewaschen (EP-Patent 178 292) und/oder durch eine Säure neutralisiert wird (EP-Patente 402 605 und 402 606) einschließlich der Kohlensäure (Polnisches Patent 165 916), mit Wasser von 100 bis 170 °C und erhöhtem Druck (DD-Patent 298 789) oder mit Enzymen mit anschließender, wahlweiser Ammoniakbehandlung (Polnisches Patent 159 085).

Keines dieser bekannten Aktivierungsverfahren ist bei Cellulose angewendet worden, die anschließend in flüssiger Phase umgesetzt wurde. Die Löslichkeit und Spinnbarkeit von Cellulosecarbamat, hergestellt nach dem Flüssigphasen-Verfahren, kann dadurch verbessert werden, daß man das Carbamat mit verdünnter Säure, wie In Salzsäure bei einer Temperatur über 100 °C und unter Druck behandelt (DE-Patent 44 43 547).

Alle bekannten Herstellungsverfahren für Cellulosecarbamat nutzen nicht genug wirksame Aktivierungen der Zellstoffe, um die erforderlichen Eigenschaften des Cellulosecarbamates zu erhalten, die für die Faser- und Folienqualitäten nötig sind.

Aufgabe dieser Erfindung ist die Herstellung von Cellulosecarbamat durch die Reaktion von Harnstoff mit Cellulose in flüssiger Phase, wobei der Zellstoff vorab so aktiviert wird, daß eine befriedigende Reaktivität erreicht wird, um ein Produkt mit gleichmäßiger Substitution und Verteilung der Carbamatgruppen in der Cellulosekette zu gewinnen, was sowohl eine gute Löslichkeit in wäßrigem Alkali als auch eine gute Spinnbarkeit garantiert und zu Fasern, Filmen und anderen Produkten mit geeigneten mechanischen und verarbeitungstechnischen Eigenschaften führt.

Die Lösung dieser Aufgabe erfolgt erfindungsgemäß durch ein Herstellungsverfahren von Cellulosecarbamat gemäß den Angaben der Patentansprüche. Dieses Verfahren ist dadurch gekennzeichnet, daß hoch reaktiver Zellstoff durch eine vorhergehende Aktivierung hergestellt wird, dann Harnstoff in wäßriger Lösung in die aktivierte Cellulose eingemischt wird bei einer Temperatur von 20 bis 60 °C während einer Zeit von 10 Minuten bis 6 Stunden, mit einem Molverhältnis von Harnstoff zu Anhydroglucoseeinheit von 0,25 : 1 bis 3 : 1, danach wahlweise ein Teil des Wassers durch Trocknung bei atmosphären- und/oder vermindertem Druck bei einer Temperatur im Bereich von 20 bis 100 °C verdampft wird, und das verbleibende Wasser durch ein flüssiges organisches Medium, wie Toluol, o-Xylol, p-Xylol, Pseudocumol, Tetralin oder Dekalin ausgetauscht wird und die Reaktion der aktivierten Cellulose mit dem Harnstoff in dem flüssigen organischen Medium bei einer Temperatur von 80 bis 180 °C während einer Zeit von 10 Minuten bis 10 Stunden durchgeführt wird, danach das Reaktionsprodukt vom flüssigen Medium abgetrennt wird und mit einem niederen Aklohol und/oder warmem und kaltem Wasser ausgewaschen wird, und das restliche flüssige organische Medium mit Dampf abgestrippt wird und das erhaltene Cellulosecarbamat wahlweise getrocknet wird.

Die Vorabaktivierung wird durch eine alkalische oder hydrothermische und/oder eine enzymatische Behandlung des Zellstoffs erreicht.

Bei der alkalischen Aktivierung wird der Zellstoff mit einer 10-20 Gew.%igen wäßrigen Natriumhydroxidlösung bei einer Temperatur von 10 bis 60 °C während einer Zeit von 10 Min. bis 10 Stunden behandelt. Danach folgt die Alterung während 10 Min. bis 30 Stunden bei einer Temperatur von 20 - 80 °C. Dann wird der Natriumhydroxid-Überschuß ausgewaschen und/oder neutralisiert, um einen NaOH-Gehalt in der Cellulose unter 5 Gew.%, vorzugsweise 0,1 bis 2 Gew.% zu erhalten. Vor, während oder nach der Neutralisation oder nach dem Waschen werden der Cellulose 0,001 bis 10 Gew.% Aktivatorsubstanz, bezogen auf Cellulose, zugegeben. Der Aktivator besteht aus organischen Stickstoffverbindungen, wie Biuret, Melamin, Guanidin und/oder deren Salze, oder Salze organischer und/oder anorganischer Säuren, wie Natriumacetat, Natriumformiat, Natriumpropionat, Natriumoxalat, Natriumsulfat, Natriumchlorid, Natriumnitrat und/oder Natriumcarbonat.

Erfindungsgemäß wird der alkalisch aktivierte Zellstoff vorzugsweise durch organische und/oder anorganische Säuren neutralisiert. In Form von Lösungen, Emulsionen und/oder Dispersionen werden solche Säuren, wie Essigsäure, Ameisensäure, Propionsäure, Oxalsäure, Schwefelsäure, Salzsäure oder Salpetersäure, oder auch organische und/oder anorganische Säureanhydride, wie Essigsäureanhydrid, Kohlendioxid, Schwefeldioxid oder Stickstoffdioxid eingesetzt.

Mittels alkalischer Behandlung wird ein alkalisch-aktivierter Zellstoff hergestellt, welcher gegenüber Harnstoff eine kontrollierte Reaktivität und eine kontrollierte Polydispersität von weniger als 2,7, vorzugsweise 2,3 hat. Die Polydispersität wird durch Größenausschluß- oder Gelchromatographie bestimmt und eine Universal-Kalibrierungsmethode benutzt, welche mit der MARK-HOUWINK-Gleichung $[\eta] = 3,40 \times 10^{-4} \times M^{0,85}$ übereinstimmt.

Bei der hydrothermischen Aktivierung wird der Zellstoff in Gegenwart von Katalysatoren mit Wasser während einer Zeit von 0,5 bis 10 Stunden bei einer Temperatur von 120 bis 160 °C behandelt. Es wird bei einem Druck bis zu 5 bar und einem Gewichtsverhältnis Cellulose zu Wasser von 1 : 10 bis 1 : 60 gearbeitet.

Erfindungsgemäß sind die Katalysatoren vorzugsweise organische und/oder anorganische Säuren in Form von Lösungen, Dispersionen und/oder Emulsionen. Verbindungen wie Bernstein-, Zitronen-, Ameisen-, Essig-, Propion- oder Schwefelsäure werden in einer Konzentration von 0,001 bis 0,1 Gew.%, bezogen auf Cellulose, eingesetzt. Gleichermaßen geeignet sind Salze, wie Kobaltacetat, Zinkacetat, Ammoniumsulfat, Kobaltsulfat, Ammoniumacetat oder Hydroxylaminsulfat in Form von Lösungen, Dispersionen und/oder Emulsionen in einer Konzentration von 0,001 bis 5,0 Gew.%, bezogen auf Cellulose.

Die katalytische, hydrothermische Behandlung der Cellulose führt zu aktiviertem Zellstoff mit einer kontrollierten Polydispersität von weniger als 2,7.

Für die enzymatische Aktivierung wird der Zellstoff mechanisch und/oder hydrothermisch und/oder durch Bleichen vorbehandelt. Der vorbehandelte Zellstoff wird enzymatisch aktiviert durch solche Enzyme wie Cellulase und/oder Hemicellulase bei einer Temperatur von 20 bis 60 °C während einer Zeit von 1 Min. bis 48 Stunden, statisch und/oder dynamisch mit einer Cellulosekonzentration von 0,1 - 20 Gew.% in der Behandlungslösung. Danach wird die enzymatische Lösung ausgewaschen und der Rest der Enzyme durch Erhitzen auf 80 - 90 °C deaktiviert.

Erfindungsgemäß sind die zur Aktivierung des Zellstoffs verwendeten Enzyme vorzugsweise aus Aspergillus niger oder Trichoderma reesei gewonnene Cellulasen mit einer CMC-Aktivität von 0,1 bis 30 E/ml, einer FPA-Aktivität von 0,01 bis 5 E/ml und einem Aktivitätsverhältnis CMC zu FPA von 1 bis 100, oder Hemicellulasen mit einer Aktivität von 0,1 bis 50 E/ml, oder eine Mischung von Cellulasen und Hemicellulasen in einem Gewichtsverhältnis von 1 : 0,1 bis 1 : 10.

Erfindungsgemäß wird die mechanische Vorbehandlung des Zellstoffs vor seiner enzymatischen Aktivierung durch Mischen, Zerkleinern oder Mahlen des Zellstoffs in Wasser während 10 Min. bis 5 Stunden bei einer Temperatur von 20 bis 90 °C durchgeführt. Eine andere Ausführung der Erfindung besteht in der hydrothermischen Vorbehandlung des Zellstoffs vor seiner enzymatischen Behandlung. In Gegenwart von Wasser, bei einem Gewichtsverhältnis von Cellulose zu Wasser von 1 : 5 bis 1 : 100 wird die hydrothermische Vorbehandlung des Zellstoffs während einer Zeit von 10 Min. bis 6 Stunden bei einer Temperatur von 110 bis 150 °C und einem Druck bis zu 5 bar vorgenommen. Eine weitere Ausführung der Erfindung umfaßt das Bleichen des Zellstoffs vor seiner enzymatischen Behandlung. Die Bleiche wird mittels Wasserstoffperoxid bei einer Konzentration von 0,1 bis 10 g/l, einer Temperatur von 20 bis 95 °C und in einer Zeit von 10 Min. bis 6 Stunden durchgeführt. Danach wird der vorbehandelte Zellstoff ausgewaschen. Die Vorbehandlung des Zellstoffs wird nach einer der drei Methoden oder der Kombination dieser Methoden, wie mechanisch und hydrothermisch, hydrothermisch und mechanisch, oder mechanisch, hydrothermisch und Bleichen, vorgenommen.

Die enzymatische Behandlung des Zellstoffs führt zu einem aktivierten Zellstoff mit kontrollierter Reaktivität gegenüber Harnstoff und einer kontrollierten Polydispersität von weniger als 2,7.

Der Zellstoff, der in der beschriebenen Weise aktiviert wurde, hat einen Polymerisationsgrad im Bereich von 200 bis 1200, vorzugsweise von 300 bis 600. Er wird während einer Zeit von 10 Min. bis 6 Stunden mit einer 20 - 60 Gew.%igen wäßrigen Harnstofflösung bei 20 bis 60 °C gemischt. Das Molverhältnis von Harnstoff zu Anhydroglucoseeinheiten beträgt vorzugsweise 0,25 : 1 bis 3 : 1, wobei einem nahezu stöchiometrischen Verhältnis der Vorzug gegeben wird. In einer Vorzugsversion der Erfindung wird die Cellulose in einem Überschuß wäßriger Harnstofflösung suspendiert und dann ein Teil der Harnstofflösung mechanisch ausgepreßt. Das Abtrennen der Lösung kann z. B. mit einem Preßfaktor von 2 bis 3 vorgenommen werden, d. h. im zurückbleibenden Produkt kommen 2 -3 Teile Harnstofflösung auf 1 Teil Cellulose. Der Preßfaktor ist abhängig von der Konzentration der Harnstofflösung. Danach kann ein Teil des Wassers aus der Cellulose und Harnstoffmischung durch Vortrocknung unter atmosphärischem oder reduziertem Druck bei 20 bis 100 °C entfernt werden. Diese Vortrocknungsstufe ist unkritisch für die weitere Umwandlung in Cellulosecarbamat, macht das Verfahren aber ökonomischer.

Das restliche Wasser oder, ohne die Vortrocknungsstufe, das gesamte Wasser aus der Cellulose/Harnstoff-Mischung wird dann mittels eines flüssigen organischen Mediums ausgetauscht. Der Austausch wird vorzugsweise so vorgenommen, indem man den organischen Reaktionsträger der Mischung zusetzt und dann das Wasser mit einem Teil des organischen Reaktionsträgers zusammen unter Atmosphären- oder vermindertem Druck abtreibt. Der Dampfdruck des Gemisches von Wasserdampf und des Dampfes des Reaktionsträgers entspricht den Einzeldampfdrücken der Komponenten. Mit der Verdampfung des Wassers bleibt Harnstoff, der vorher gelöst war, in fester Form in der Cellulose zurück. Man erhält eine Suspension in der in einem flüssigen organischen Reaktionsträger Cellulose, die feinverteilten Harnstoff enthält, vorliegt.

Danach wird die Mischung von Cellulose, Harnstoff und flüssigem organischem Medium durch Erhitzen bei 80 bis 180 °C zu Cellulosecarbamat umgesetzt. Vorzugsweise wählt man am Ende der Umsetzung einen Temperaturbereich von 130 - 180 °C. Die Zeitdauer beträgt 10 Min. bis 10 Stunden und der Druck 0,05 bis 5 bar (abs.) in Anwesenheit eines inerten Trägergases. Durch das Kochen des organischen Reaktionsträgers entsteht daraus das inerte Trägergas, welches das bei der Reaktion sich bildende Ammoniak austrägt. Das inerte Trägergas und der organische Reaktionsträger sind in diesem Falle chemisch identisch. In einer anderen Version der Erfindung wird das inerte Trägergas von außen in den flüssigen Reaktionsträger geleitet. In diesem Falle ist das inerte Trägergas vom Reaktionsträger chemisch verschieden und es ist nicht nötig, am Siedepunkt des Reaktionsträgers zu arbeiten. Das Inertgas dient als Transportgas für das gebildete Ammoniak. Geeignete Inertgase sind z. B. Stickstoff, Argon und gasförmige Kohlenwasserstoffe wie Methan, Ethan, Propan, oder Mischungen daraus. Das Molverhältnis von Inertgas zu gebildetem Ammoniak liegt im Bereich von 1 : 1 bis 5 : 1.

Danach wird das erhaltene Cellulosecarbamat aus dem flüssigen Medium entfernt und mit einem niederen Alkohol und/oder mit warmem oder kaltem Wasser gewaschen. Das restliche organische Medium wird mit Dampf abgestrippt und das erhaltene Cellulosecarbamat wahlweise getrocknet. Die Gewinnung des Cellulosecarbamates kann so durchgeführt werden, wie im US-Patent 5 378 827 oder in der DE-Anmeldung 44 17 410 beschrieben, die beide hier eingeschlossen werden.

Das Cellulosecarbamat kann nach der Wäsche ohne weitere Reinigung in Lösung gebracht werden zur Herstellung von Cellulose-Regenerat-Produkten wie Filme, Fasern und andere Artikel.

Das erfindungsgemäße Verfahren gestattet die Erzeugung eines qualitätsgerechten Cellulosecarbamates charakterisiert durch eine gleichmäßige Verteilung und Substitution der Carbamatgruppen in der Cellulosekette, was zu einer sehr guten Löslichkeit in wäßriger, alkalischer Lösung bei hoher Stabilität und entsprechender Viskosität dieser Lösung führt. Die Cellulosecarbamatsynthese in flüssiger Phase führt bei der Verwendung von hoch reaktivem Zellstoff, der erfindungsgemäß aktiviert wurde, zu einer gleichmäßigen Verteilung des Harnstoffs, eingeschoben in die Cellulosestruktur, was die Reaktivität der Cellulose mit dem Harnstoff in der flüssigen Phase beeinflußt. Man erhält ein Cellulosecarbamat mit günstigen Eigenschaften seiner alkalischen Lösung, einschließlich einer $\alpha$-Cellulosekonzentration bis zu 10 Gew.%, einer Temperaturstabilität im Bereich zwischen 0 °C und 15 °C während eines Zeitraums von 72 bis 120 Stunden und einer Spinnbarkeit, welche es erlaubt, Fasern und Folien mit adäquaten mechanischen und verarbeitungstechnischen Eigenschaften zu erzeugen. Der wesentliche Vorteil des erfindungsgemäßen Verfahrens besteht in der Möglichkeit, durch Einsatz von aktiviertem, hochreaktiven Zellstoff bei der Synthese in flüssiger Phase Cellulosecarbamat von Faserqualität zu erhalten, welches zur Herstellung von Fasern und Folien geeignet ist.

Die Verwendung von hochreaktiven Zellstoffen gemäß der Erfindung erlaubt es, die Energie der Wasserstoffbindungen zu verringern und dadurch Einfluß zu nehmen auf molekulare, supermolekulare und morphologische Strukturwandlungen. Deshalb ist die Einschiebung des Harnstoffes in die Cellulosestruktur gleichmäßiger und sehr viel besser als bei bekannten Methoden. Gleichzeitig garantiert die Reaktivität des erfindungsgemäß aktivierten Zellstoffs, die gleichmäßige Substitution der Carbamatgruppen in der Cellulosekette, was die Eigenschaften und das Verhalten des synthetisierten Cellulosecarbamats positiv beeinflußt, insbesondere das Löseverhalten und die Lösungseigenschaften einschließlich der Stabilität und der Spinnbarkeit. Im Vergleich zu bekannten Methoden gestattet die Verwendung von hochreaktivem Zellstoff für die Reaktion mit Harnstoff in flüssiger Phase, entsprechend der Erfindung, die Herstellung von Cellulosecarbamat mit vorteilhafterem Verhalten und Eigenschafen, speziell, was die Löslichkeit, die Lösungseigenschaften und die Spinnbarkeit anbelangt. Der Vorteil des erfindungsgemäßen Verfahrens ist auch verbunden mit der Vortrocknung des Harnstoffes, eingelagert in den hochreaktiven Zellstoff. Diese Vortrocknung verringert die Synthesedauer des Cellulosecarbamates und vereinfacht die Reaktionsapparatur.

Der Erfindung entsprechend wird bei der alkalischen Aktivierung hochaktivierter Zellstoff erzeugt, welcher einen kontrollierten Polydispersionsgrad von weniger als 2,7 hat, vorzugsweise 2,3, während die Ausgangszellstoffe durch einen Wert dieses Parameters charakterisiert sind, der nicht niedriger als 3,5 ist. Der Polydispersionsgrad von Zellstoffen, die nach bekannten Methoden aktiviert wurden, ist nicht niedriger als 3.0. Wird die alkalische Behandlung erfindungsgemäß in Gegenwart von Aktivatoren durchgeführt, so wird die kontrollierte Aktivierung der Zellstoffe beeinflußt. Erfindungsgemäß sind diese Aktivatoren stickstoffhaltige organische Verbindungen, wie Biuret, Melamin, Guanidin und/oder deren Salze. Diese Aktivatoren wirken sowohl während des gleichmäßigen Einschiebens des Harnstoffes in die Cellulosestruktur als auch während der Cellulosecarbamatsynthese. Entsprechend einer anderen Ausführung der Erfindung sind die Aktivatoren auch Salze organischer und/oder anorganischer Säuren, wie Natriumacetat, Natriumpropionat, Natriumsulfat, Natriumkarbonat. Diese Aktivatoren wirken bei der Synthese in der flüssigen Phase hauptsächlich durch die Kontrolle der Poren, speziell deren Größe, Dimensionen und Verteilung während des Einschiebens des Harnstoffes in die Cellulosestruktur. Deshalb erhält man eine gleichmäßige Harnstoffverteilung. Gleichzeitig wirken diese Aktivatoren bei der Cellulosecarbamatsynthese in flüssiger Phase auch auf die gleichmäßige Substitution der Carbamatgruppen ein. Erfindungsgemäß werden die Aktivatoren vor, während oder nach der Neutralisation der Alkalicellulose durch organische und/oder anorganische Säuren und/oder deren Anhydride zugegeben.

Die hydrothermische Aktivierung in Gegenwart von Katalysatoren, führt erfindungsgemäß zu hochreaktiven Zellstoffen mit einem kontrollierten Polydispersitätsgrad von weniger als 2,7. Die hydrothermische Behandlung der Zellstoffe erfolgt erfindungsgemäß in Gegenwart von Katalysatoren. Diese sind sowohl organische und/oder anorganische Säuren als auch deren Salze, welche die Degradation und den Aktivierungsprozeß kontrollieren. Die kontrollierte hydrothermische Aktivierung wird während einer kurzen Zeit im Bereich von 30 Min. bis 10 Stunden durchgeführt, und man erhält gegenüber Harnstoff hochreaktive Zellstoffe, woraus sich ein für die Faserherstellung qualitätsgerechtes Cellulosecarbamat mit einer gleichmäßigen Verteilung der Carbamatgruppen in der Cellulosekette ergibt.

Erfindungsgemäß erhält man bei der enzymatischen Aktivierung hochreaktive Zellstoffe mit einem Polydispersitätsgrad, der niedriger als 2,7 ist. Der enzymatischen Behandlung geht eine geeignete mechanische und/oder hydrothermische und/oder bleichende Verbehandlung voraus, um das Kapillarsystem in der Cellulosestruktur für das Eindringen der Enzyme zu öffnen. Die enzymatische Aktivierung des Zellstoffes wirkt hauptsächlich auf die Degradation und auf die Zellstoffaktivierung ein, indem die Wasserstoffbindungen sowohl interals auch intramolekular gelockert werden, woraus während des Einmischungsprozesses ein besseres Eindringen des Harnstoffes und seine gleichmäßigere Verteilung in der Cellulosestruktur resultiert. Gleichzeitig erhöht sich die Verfügbarkeit der Hydroxylgruppen in der Cellulosekette und ihre Reaktivität gegenüber Harnstoff.

Die Vorteile dieser Aktivierung sind die milden Behandlungsbedingungen, wie kurze Behandlungszeiten, niedrige Prozeßtemperaturen und keine Freisetzung von Nebenprodukten während des Verfahrens. Erfindungsgemäß werden die wirkungsvollsten Cellulasen und/oder Hemicellulasen verwendet.

Die in den nachfolgenden Beispielen und in der Beschreibung angegebenen Kenndaten wurden nach folgenden Methoden bestimmt:

- Polydispersität ($P_D$) durch Größenausschluß-Chromatographie mit einem Gerät von Hewlet-Packard HP-1050 mit refraktometrischem Detektor HP 1047 A und Säulen mit PL Gel Gemisch B 10 μm (600mm) von Polymer Lab. unter Verwendung von Polystyrol-Standards bei einer Säulentemperatur von 80 °C unter Verwendung von Dimethylacetamid mit 0,5 Gew.-% LiCl als Lösungsmittel.
- Polymerisationsgrad ($\overline{DP}_W$) durch Viskosimetrie unter Verwendung einer Komplex-Lösung von Natriumeisen (III)-tartrat gemäß der Publikation: "Das Papier 12 [1958] 187".
- Kristallinitätsindex (CrI) röntgenographisch gemäß "Textile Research Journal 29 [1959] 786".
- Wasserrückhaltewert (WRV) gemäß "Cellulose Chemistry and Technology 11 [1978] 633".
- Energie der Wasserstoff-Bindungen ($E_H$) durch Infrarot-Spektroskopie gemäß "Cellulose Chemistry and Technology 7 [1973] 153".
- Stickstoff-Gehalt nach Kjeldahl gemäß "Chemia Analityczna (Polen) 5 [1960] 1039".
- α-Cellulose-Gehalt gemäß der Polnischen Fachnorm ZN-70/MPCh-WS-8.
- Natriumhydroxid-Gehalt gemäß der Polnischen Fachnorm ZN-70/MPCh-WS-85.
- Viskosität der Cellulosecarbamat-Lösung mit einem Ubbelohde-Viskosimeter gemäß der Polnischen Fachnorm MB/WS-58/1.22.04.
- Reifegrad der Cellulosecarbamat-Lösung gemäß der Polnischen Fachnorm MB/WS-58/1.22.031, jedoch unter Verwendung von Ammoniumhydrogencarbonat.
- Filterwert ($K_W$) gemäß der Polnischen Fachnorm BN-70/7516-03.
- Löslichkeitsgrad des Cellulosecarbamates: Die Lösung von 5 Gew.-% Polymer (Cellulosecarbamat) in 9 Gew.-%iger wäßriger NaOH-Lösung wurde 24 Stunden (bei 10 bis 12 °C) nach Herstellung der Lösung hinsichtlich der Licht-Absorption bei einer Wellenlänge von 400 μm, der Intensität der Lichtdiffusion und der Viskosität (bei 20 °C) sowie unter dem Mikroskop untersucht und entsprechend den Ergebnissen qualitativ die Löslichkeitsgrade zugeordnet, wobei 0 gleich unlöslich und 5 gleich ausgezeichnet löslich bedeutet.
- CMC-Enzym-Aktivität: 1,0 ml Enzym und 1,0 ml 0,5 %ige (Gew./Vol.) Carboxymethylcellulose (CMC)-Lösung, beide in 0,05 n Natriumacetat-Puffer mit pH = 4,8, werden gemischt und 10 Min. bei 50 °C gehalten. Nach Zugabe von 3,0 ml 1 Gew.%ige Dinitrosalicylsäure-Lösung wird das Gemisch 5 min gekocht, und nach Abkühlen die Licht-Absorption bei 540 nm gegen eine Blindprobe gemessen. Die Auswertung erfolgt anhand einer Eichkurve, wobei eine CMC-Aktivitäts-Einheit/ml (E/ml) der Freisetzung von 1 $\mu$mol reduzierendem Zucker, angegeben als Glucose-Äquivalente, in 1 Minute enspricht.

- FPA-Enzym-Aktivität (Filterpapier-Aktivität): 50 mg Whatman Nr. 1 Filterpapier (ca. 59 x 10 mm) in 1,0 ml 0,05 n Natriumacetat-Lösung (pH = 4,8) von 50 °C und 1,0 ml Enzym in 0,05 n Natriumacetat-Puffer mit pH = 4,8 werden 60 min bei 50 °C gehalten. Nach Zugabe von 3,0 ml 1 Gew.%ige Dinitrosalicylsäure-Lösung wird das Gemisch 5 min gekocht und nach Abkühlen die Absorption in gleicher Weise, wie bei der CMC-Aktivität, gemessen. Eine FPA-Aktivitäts-Einheit/ml (E/ml) entspricht der Freisetzung von 1 $\mu$mol reduzierendem Zucker, als Glucose-Äquivalent, in 1 Minute.

In den nachfolgenden Beispielen wurde Harnstoff technischer Qualität mit einem Stickstoffgehalt von 46,3 Gew.% und einer Schmelztemperatur von 131 °C verwendet. Alle anderen Chemikalien ware von reinster Qualität.

Beispiel 1

0,25 Gewichtsteile Zellstoff der Sorte ALICELL (Kanadischer Fichten-Sulfit-Zellstoff) charakterisiert durch einen Durchschnittspolymerisationsgrad von $\overline{DP}_W = 676$, einen Kristallinitätsindex von CrI = 67,8 %, einen Wasserrückhaltewert von WRV = 43,3 %, einer Energie der Wasserstoffbindungen von $E_H$ = 13,9 - 21,4 kJ/mol, einer Polydispersität von $P_D$ = 3,19 und einen Feuchtigkeitsgehalt von 8 Gew.% wurden in Blattform in eine Tauchpresse (Merzerisierpresse) eingebracht. Die Presse enthielt 75 Volumenteile einer 18 Gew.%igen wäßrigen Natriumhydroxidlösung mit einer Temperatur von 45 °C. Die Alkalisierung wird 60 Min. lang bei 42 - 45 °C durchgeführt. Dann wurde die restliche NaOH-Lösung abgelassen und die merzerisierten Zellstoffblätter abgepreßt. Die erhaltene Alkalicellulose wurde in einen Zerreißer überführt und 2 Stunden zerkleinert. Die zerkleinerte Alkalicellulose wurde in einen Reifetank gebracht und während 4 Stunden bei 40 °C einem Abbauprozeß unterworfen. 0,65 Gew.% der erhaltenen Alkalicellulose, die 35,4 Gew.% $\alpha$-Cellulose und 15,7 Gew.% NaOH enthielt und einen $\overline{DP}_W$ = 331 hatte, wurden in einem mit einem Rührer ausgerüsteten Kessel mit 4 Volumenteilen Wasser und 0,5 Volumenteilen einer 80%igen Essigsäure und 1 Stunde lang gemischt. Dann wurde die aktivierte Zellstoffsuspension über eine Nutsche abfiltriert. 0,822 Gewichtsteile der erhaltenen feuchten aktivierten Cellulose, charakterisiert durch $\overline{DP}_W$ = 338, CrI = 64,0 WRV = 90,0, $P_D$ = 1,91, $E_H$ = 11,5 - 14,6 kJ/mol, wurden zusammen mit 1,868 Volumen-Teilen Wasser und 0,510 Gewichtsteilen Harnstoff in einen Mischer überführt, um den Harnstoff in die Cellulosestruktur einzubetten. Dieser Einbettungsprozeß wurde während 1 Stunde bei 40 °C durchgeführt. Der Zellstoff mit dem eingearbeiteten Harnstoff wurde über eine Nutsche filtriert und ausgepreßt bis auf ein Endgewicht von 0,6 Gewichtsteilen. Die Cellulose mit 62,9 Gew.% eingemischtem Harnstoff wurde in einen Reaktor überführt, der mit einem Rührer und einem Rückflußkühler ausgerüstet war und 3,2 Volumenteile o-Xylol ($K_P$ 142-147 °C) enthielt. Der Reaktorinhalt wurde 2 Stunden bei 146 °C unter Kochen erhitzt und dabei mit 100 U/min gerührt. Nach der Synthese wurde der o-Xylol-Überschuß über eine Nutsche abfiltriert und ausgepreßt. Das technische Cellulosecarbamat wurde dann wieder in einen Reaktor, der 3,5 Volumenteile Wasser enthielt, eingebracht und das restliche o-Xylol bei 88 °C während 1,5 Stunden abgestrippt. Danach wurde das Produkt über eine Nutsche abfiltriert, mit warmem und kaltem Wasser gewaschen und bei 50 °C 12 Stunden unter Normaldruck getrocknet.

Erhalten wurden 0,22 Gewichtsteile Cellulosecarbamat, charakterisiert durch eine weiße Farbe, einem $\overline{DP}_W$ von 309 und einem Stickstoffgehalt von 1,6 Gew.% und sehr guter Löslichkeit in 9 Gew.%iger wäßriger Natriumhydroxidlösung. Auf einer Skala des relativen Löslichkeitsgrades von 0 (nicht löslich) bis 5 (sehr gut löslich) wurde mit der Note 5 der beste Wert erreicht. Cellulosecarbamat aus nicht aktiviertem ALICELL-Zellstoff, das unter denselben Syntheseparametern hergestellt wurde, war charakterisiert durch einen $\overline{DP}_W$ von 493, einen Stickstoffgehalt von 2,7 Gew.-% und einer schlechten Löslichkeit in 9 Gew.%iger wäßriger Natriumhydroxidlösung. Der lösliche Anteil dieses Cellulosecarbamates betrug nur 41 % des gesamten Gewichts der Probe und der Löslichkeitsgrad wurde mit nur 2 bewertet.

Beispiel 2

0,25 Gewichtsteile Ketchikan-Zellstoff (aus Fichtenholz) mit $\overline{DP}_W$ = 577, CrI = 65,5 %, WRV = 65 %, $E_H$ = 12,8 - 21,4 kJ/mol, $P_D$ = 3,51 und einem Feuchtigkeitsgehalt von 7 Gew.% wurden in Blattform, wie in Beispiel 1, bei 42 - 45 °C während 1 Stunde alkalisiert. Es wurden 3,5 Gewichtsteile einer 18 Gew.%igen wäßrigen NaOH-Lösung verwendet. 0,49 Gewichtsteile der erhaltenen Alkalicellulose mit 34,3 Gew.% $\alpha$-Cellulose und 15,6 Gew.% NaOH wurden in einem Zerfaserer 2 Stunden bei 29,5 bis 37 °C zerkleinert. Danach wurde die Alkalicellulose 5 Stunden bei 39 °C abgereift. Diese Alkalicellulose wurde über eine Nutsche filtriert und mit Wasser vollständig NaOH-frei gewaschen. Danach wurde die aktivierte Cellulose abgepreßt. 0,5 Gewichtsteile der nassen aktivierten Cellulose mit einem Gehalt von 42 Gew.% $\alpha$-Cellulose, einem $\overline{DP}_W$ von 358, einem CrI von 61,1 %, einem WRV = 85 % und einem $P_D$ = 2,37 wurden in den Zerfaserer überführt und 1 Stunde bei 25 °C mit 0,08 Gewichtsteilen Harnstoff gemischt.

Der mit Harnstoff vermischte Zellstoff wurde dann 12 Stunden bei 50 °C vorgetrocknet. 0,33 Gewichtsteile des mit Harnstoff vermischten Zellstoffs, enthaltend 64,6 Gew.% $\alpha$-Cellulose und 12,3 Gew.% Feuchtigkeit wurden, wie in Beispiel 1, in einen Reaktor überführt, der 4 Gewichtsteile o-Xylol ($K_P$ 142-147 °C) enthielt. Die Reaktion wurde bei 146 °C während 2 Stunden durchgeführt. Die Reinigung des Produktes erfolgte wie in Beispiel 1. Es wurden 0,23 Gewichtsteile weißes Cellulosecarbamat erhalten. Das Produkt hatte ein $\overline{DP}_W$ von 380, einen Stickstoffgehalt von 2,2 Gew.-% und war in 9 Gew.%iger wäßriger NaOH-Lösung sehr gut löslich. Der Löslichkeitsgrad wurde mit der höchsten Note (5) bewertet.

Beispiel 3

0,25 Gewichtsteile eines ALICELL-Zellstoffes, mit den Eigenschaften wie im Beispiel 1 wurden analog Beispiel 1 alkalisiert. 0,65 Gewichtsteile der abgebauten Alkalicellulose wurden im Mischer 1 Stunde mit gasförmigem Kohlendioxid gesättigt. Die neutralisierte Cellulose wurde mit 4 Volumenteilen Wasser versetzt und 1 Stunde gemischt und danach über eine Nutsche filtriert. 0,85 Gewichtsteile der nassen aktivierten Cellulose mit $\overline{DP}_W$ = 358, CrI = 61,1 %, WRV = 74,6 %, $P_D$ = 2,37 wurden in einen Mischer überführt und 0,51 Gewichtsteile Harnstoff zusammen mit 1,84 Volumenteilen Wasser hinzugefügt. Die Mischung wurde bei 40 °C 2 Stunden homogenisiert. Die mit Harnstoff vermischte Cellulose wurde filtriert und wie in Beispiel 1 in den Reaktor eingetragen. Die Synthese des Cellulosecarbamates wurde während 1 Stunde bei 145 °C unter den sonstigen Bedingungen des Beispiels 1 durchgeführt. Erhalten wurden 0,23 Gewichtsteile weißes Cellulosecarbamat mit $\overline{DP}_W$ = 368 und einem Stickstoffgehalt von 1,2 Gew.-%, das in 9 Gew.%iger NaOH-Lösung sehr gut löslich war. Der Löslichkeitsgrad wurde mit der Note 5 bestimmt.

Beispiel 4

0,2 Gewichtsteile eines SWIECIE-Zellstoffs (polnischer Zellstoff aus Birken-Hartholz) mit $\overline{DP}_W$ = 653, CrI = 67,8 %, WRV = 69,6 %, $P_D$ = 3,04, $E_H$ = 12,87 - 24,24 kJ/mol und einem Feuchtigkeitsgehalt von 9 Gew.% wurden wie in Beispiel 2 alkalisiert. Die anschließende Reife der Alkalicellulose wurde während 10 Stunden bei 39 °C durchgeführt. Danach wurde die Alkalicellulose in einem Zerfaserer mit 0,035 Gewichtsteilen Ameisensäureanhydrid und 0,05 Gewichtsteilen Harnstoff bei 30 °C 1 Stunde lang gemischt. Die aktivierte Cellulose hatte einen $\overline{DP}_W$ = 350, einen CrI von 64,2 %, einen WRV von 79,1 %, einen $P_D$ von 2,38 und einen $E_H$ von 11,5 - 17,9 kJ/mol.

Der mit dem Harnstoff vermischte, aktivierte Zellstoff wurde wie in Beispiel 1 in einen Reaktor mit 3,2 Volumenteilen o-Xylol überführt und die Synthese wie in Beispiel 1 während 2 Stunden bei 146 °C durchgeführt.

Die erhaltenen 0,18 Gewichtsteile Cellulosecarbamat hatten einen $\overline{DP}_W$ = 330 und einen Stickstoffgehalt von 2,1 Gew.%. Das Cellulosecarbamat war in 9 Gew.%iger wäßriger NaOH-Lösung sehr gut löslich. Seine relative Löslichkeit wurde mit dem Wert von 5 bestimmt.

Beispiel 5

0,25 Gewichtsteile Ketchikan-Zellstoff (aus Fichtenholz) in Blattform mit $\overline{DP}_W$ = 608, CrI = 60,2 %, WRV = 48,6 %, $E_H$ = 12,7 - 21,4 kJ/mol, $P_D$ = 3,82 und einem Feuchtigkeitsgehalt von 7 Gew.% wurden unter Verwendung von 12 Gew.%iger wäßriger NaOH-Lösung 1 Stunde bei 45 °C alkalisiert. Dann wurde die Alkalicellulose mit einem Preßfaktor von 2,5 abgepreßt und in einem Zerfaserer 2 Stunden bei 21 - 29 °C zerkleinert. Es wurden 0,62 Gewichtsteile Alkalicellulose mit einem $\alpha$-Cellulosegehalt von 37,5 Gew.% und einem NaOH-Gehalt von 8 Gew.% erhalten. Die zerkleinerte Alkalicellulose wurde in eine Baratte überführt, in welche gasförmiges Schwefeldioxid eingespeist wurde, um während einer Zeit von 2 Stunden unter ständigem Drehen der Baratte eine vollständige Neutralisation zu erreichen. Es wurden 5 Gewichtsteile Wasser hinzugegeben und nach einer 30-minütigen Mischzeit wurde über eine Nutsche filtriert.

0,72 Gewichtsteile nasser Cellulose mit $\overline{DP}_W$ = 350, WRV = 79,5 %, CrI = 67,0 %, $P_D$ = 2,4 wurden zusammen mit 1,0 Gewichtsteilen Harnstoff und 1,48 Gewichtsteilen Wasser in einen Mischer gegeben. Die Einarbeitung des Harnstoffs in die Cellulose erfolgte unter Rühren, während einer Stunde bei 40 °C. Die mit Harnstoff vermischte Cellulosesuspension wurde filtriert und ausgepreßt, um letztlich 0,6 Gewichtsteile der Cellulose-/Harnstoff-Mischung zu erhalten. Die Mischung wurde unter den Bedingungen des Beispiels 2 zu Cellulosecarbamat synthetisiert.

Es wurden 0,230 Gewichtsteile weißes Cellulosecarbamat erhalten mit $\overline{DP}_W$ = 340, einem Stickstoffgehalt von 2,4 Gew.% und einer guten Löslichkeit in 9 Gew.%iger wäßriger NaOH-Lösung. Der relative Löslichkeitsgrad des Produktes lag zwischen 4 und 5.

Beispiel 6

0,25 Gewichtsteile Ketchikan-Zellstoff in Blattform mit den in Beispiel 5 genannten Werten wurde wie in Beispiel 1 mit 4,0 Volumenteilen 18 Gew.%iger wäßriger NaOH-Lösung bei 40 °C während 1 Stunde alkalisiert. Die Alkalicellulose wurde mit einem Preßfaktor von 2,5 abgepreßt und danach 2 Stunden bei 20 - 40 °C zerkleinert.

0,62 Gewichtsteile der zerkleinerten Alkalicellulose mit einem $\alpha$-Cellulosegehalt von 37,5 Gew.% und einem NaOH-Gehalt von 15,3 Gew.% wurden in einen Zerfaserer überführt. Nach der Zugabe von 0,176 Gewichtsteilen Propionsäure wurde die Mischung 1 Stunde gerührt. Nach der Zugabe von 0,1 Gewichtsteilen Harnstoff wurde die Mischung nochmals 1 Stunde homogenisiert. Die aktivierte Cellulose hatte einen $\overline{DP}_W$ = 346, einen WRV = 80,1 %, einen CrI = 65,3 % und einen $P_D$-Wert von 2,6. Die mit Harnstoff vermischte Cellulose wurde in einen Reaktor eingebracht und 2 Stunden bei 146 C, wie in Beispiel 2 zu Cellulosecarbamat, synthetisiert.

Erhalten wurden 0,24 Gewichtsteile weißes Cellulosecarbamat mit $\overline{DP}_W$ = 350, Stickstoffgehalt 2,1 Gew.% und guter Löslichkeit in 9 Gew.%iger NaOH-Lösung. Der relative Löslichkeitsgrad betrug 4.

Beispiel 7

0,25 Gewichtsteile Ketchikan-Zellstoff mit Kennwerten wie im Beispiel 5 wurden in Blattform wie in Beispiel 1 alkalisiert. Die zerkleinerte Alkalicellulose wurde in einen Zerfaserer überführt und 0,107 Gewichtsteile Oxalsäure zugegeben. Die Mischung wurde 1 Stunde homogenisiert. Die neutralisierte Cellulose wurde mit Wasser mehrmals gewaschen. Es verblieben 0,01 Gew.% Natriumoxalat innerhalb der Cellulosestruktur. Die aktivierte Cellulose hatte die folgenden Werte: $\overline{DP}_W$ = 338, WRV = 82,1 %, CrI = 63,0 %, $P_D$ = 2,64. Diese aktivierte Cellulose wurde in einen Mischer gegeben und 0,1 Gewichtsteile Harnstoff zusammen mit 1,0 Volumenteilen Wasser hinzugefügt. Das Vermischen erfolgte dann während 1 Stunde bei 30 °C. Danach wurde die Suspension filtriert, wobei 0,55 Gewichtsteile der nassen Mischung erhalten wurden. Diese Mischung wurde unter den Bedingungen des Beispiels 1 zu Cellulosecarbamat synthetisiert.

Erhalten wurden 0,245 Gewichtsteile weißes Cellulosecarbamat mit einem $\overline{DP}_W$ = 358 und einem Stickstoffgehalt von 2,5 Gew.%, das gut in 9 Gew.%iger wäßriger NaOH-Lösung löslich war. Der relative Lösungsgrad wurde mit 4 bestimmt.

Beispiel 8

0,25 Gewichtsteile Ketchikan-Zellstoff mit Werten wie in Beispiel 5 wurden gemäß Beispiel 1 alkalisiert. Die zerkleinerte Alkalicellulose wurde in einen Zerfaserer überführt, 0,232 Gewichtsteile 49%iger Schwefelsäure zugegeben und 2 Stunden homogenisiert. Die neutralisierte Cellulose wurde bis auf einen 0,05 Gew.%igen Natriumsulfatgehalt mehrmals mit Wasser gewaschen. Die aktivierte Cellulose hatte die folgenden Werte: $\overline{DP}_W$ = 360, WRV = 77,5 %, CrI = 62,6 %, $P_D$ = 2,70. Dann wurden 0,1 Gewichtsteile Harnstoff mit 1 Volumenteil Wasser zu der aktivierten Cellulose in einen Mischer gegeben. Diese Mischung wurde 1 Stunde bei 20 °C homogenisiert. 0,60 Gewichtsteile der nassen Cellulosemischung wurden für die Cellulosecarbamat-Synthese gemäß Beispiel 1 eingesetzt.

Erhalten wurden 0,24 Gewichtsteile weißes Cellulosecarbamat mit einem $\overline{DP}_W$ = 354 und einem Stickstoffgehalt von 1,9 Gew.%, das in 9%iger NaOH-Lösung sehr gut löslich war. Der relative Löslichkeitsgrad des Produktes lag bei 4,5.

Beispiel 9

0,25 Gewichtsteile Ketchikan-Zellstoff (aus Fichtenholz) mit $\overline{DP}_W$ = 577, WRV = 65,5 %, CrI = 65 %, $P_D$ = 3,51 wurden wie in Beispiel 1 alkalisiert und behandelt. Die zerkleinerte Alkalicellulose wurde in einen Zerfaserer überführt und 0,242 Gewichtsteile einer 36%igen Salzsäurelösung zugegeben. Diese Mischung wurde 1 Stunde homogenisiert. Die neutralisierte Cellulose wurde bis auf einen 0,005 Gew.%igen Natriumchloridgehalt gewaschen. Die aktivierte Cellulose hatte folgende Werte: $\overline{DP}_W$ = 350, WRV = 78,3 %, CrI = 64,5 %, $P_D$ = 2,7. Ansonsten wurde die Cellulose wie in Beispiel 8 weiterbehandelt. 0,243 Gewichtsteile des erhaltenen weißen Cellulosecarbamates mit einem $\overline{DP}_W$ = 360 und einem Stickstoffgehalt von 2,2 Gew.% waren in 9 Gew.%iger NaOH-Lösung sehr gut löslich. Der relative Löslichkeitsgrad des Produktes lag zwischen 4 und 5.

Beispiel 10

0,25 Gewichtsteile von Ketchikan-Zellstoff mit Werten wie in Beispiel 9 wurde in Blattform gemäß Beispiel 1 alkalisiert. Die zerkleinerte Alkalicellulose wurde 15 Stunden bei 40 °C abgereift und danach mittels gasförmigem Kohlendioxid neutralisiert. Die aktivierte Cellulose enthielt 18 Gew.% Natriumcarbonat und war durch folgende Werte charakterisiert: $\overline{DP}_W$ = 338, CrI = 61,4 %, WRV = 99 %, $P_D$ = 1,99 und $E_H$ = 13,1 kJ/mol. Das Einmischen von 0,1 Gewichtsteilen Harnstoff in die aktivierte Cellulose und die Synthese zu Cellulosecarbamat erfolgten entsprechend Beispiel 2.

Erhalten wurden 0,284 Gewichtsteile weißes Cellulosecarbamat mit $\overline{DP}_W$ = 338 und einem Stickstoffgehalt von 3,2 Gew.%, die einen relativen Löslichkeitsgrad von 4 - 5 hatten. Die alkalische Lösung des Cellulosecarbamates wurde wie folgt charakterisiert: $\alpha$-Cellulosegehalt 5,5 Gew.%, NaOH-Gehalt 9,08 Gew.%, Viskosität bei 20 °C 7 Sekunden, Reifegrad 16° H und Filterwert $K_W$ = 302.

Beispiel 11

0,25 Gewichtsteile Ketchikan-Zellstoff mit den Kenndaten wie in Beispiel 9 wurde entsprechend Beispiel 1 alkalisiert. Die Reife wurde bei 40 °C während 5 Stunden durchgeführt und die Neutralisation mit 0,2 Volumenteilen 80%iger wäßriger Essigsäurelösung vorgenommen. Die neutralisierte Cellulose wurde mehrmals gewaschen, bis die aktivierte Cellulose nur noch 0,1 Gew.% Natriumacetat enthielt. Die aktivierte Cellulose wies folgende Werte auf: $\overline{DP}_W$ = 399, CrI = 64,7 %, WRV = 92,2 %, $E_H$ = 11,6 kJ/mol und $P_D$ = 2,18. Das Einmischen von 0,1 Gewichtsteilen Harnstoff in die aktivierte Cellulose und die Synthese des Cellulosecarbamates erfolgten wie im Beispiel 2.

Erhalten wurden 0,25 Gewichtsteile weißes Cellulosecarbamat, das einen $\overline{DP}_W$ von 455, einen Stickstoffgehalt von 3,3 Gew.% und einen relativen Löslichkeitsgrad von 4 hatte. Die alkalisierte Lösung dieses Produktes hatte einen $\alpha$-Cellulosegehalt von 5,14 Gew.%, einen NaOH-Gehalt von 8,58 Gew.%, eine Viskosität bei 20 °C von 48 Sekunden, einen Reifegrad von 15° H und einen Filterwert von $K_W$ = 420.

Beispiel 12

0,25 Gewichtsteile Ketchikan-Zellstoff, Kennwerte wie in Beispiel 9, wurden wie in Beispiel 11 aktiviert und mit Harnstoff vermischt. Unter Verwendung von Pseudocumol (Dichte 20/4 = 0,867 g/cm$^3$; $K_P$ 166-169 °C) als organischem Medium wurde die Synthese zu Cellulosecarbamat bei 155 °C während 1 Stunde unter den sonstigen Bedingungen des Beispiels 1 durchgeführt. Die erhaltenen 0,246 Gewichtsteile weißen Cellulosecarbamates hatten einen $\overline{DP}_W$ von 381, einen Stickstoffgehalt von 2,6 Gew.% und einen relativen Löslichkeitsgrad von 5.

Beispiel 13

0,25 Gewichtsteile Ketchikan-Zellstoff, Kennwerte wie in Beispiel 9, wurden entsprechend Beispiel 11 aktiviert und dann 1 Stunde bei 40 °C abgereift. Das Neutralisieren und Waschen wurde wie in Beispiel 11 durchgeführt. Die aktivierte Cellulose hatte folgende Werte: $\overline{DP}_W$ = 405, WRV = 77,3 %, Crl = 64,5 %, $P_D$ = 1,94. Die aktivierte Cellulose wurde entsprechend Beispiel 2 mit 0,1 Gewichtsteilen Harnstoff vermischt. Die Cellulosecarbamat-Synthese wurde bei 135 °C während 4 Stunden durchgeführt, ansonsten wurde nach Beispiel 1 verfahren.

Die erhaltenen 0,249 Gewichtsteile weißes Cellulosecarbamat hatten einen $\overline{DP}_W$ von 393, einen Stickstoffgehalt von 3,2 Gew.% und einen relativen Löslichkeitsgrad im Bereich von 4 bis 5.

Beispiel 14

0,25 Gewichtsteile ALICELL-Zellstoff (Kanadischer Fichten-Sulfit-Zellstoff) mit den Kennwerten des Beispiels 1 wurde nach Beispiel 1 alkalisiert. Die erhaltene Alkalicellulose wurde mit einem Preßfaktor von 2,6 abgepreßt. Die Zerkleinerung der Alkalicellulose wurde in einem Zerfaserer bei 25 - 45 °C durchgeführt. Die Alkalicellulose wurde 5 Stunden bei 40 °C abgereift. Die zerkleinerte Cellulose wurde in einen Mischbehälter überführt, der 3,85 Gewichtsteile einer 3,8 Gew.%igen Essigsäurelösung enthielt. Nach 1 Stunde wurde die Suspension 15 Stunden bei 20 °C gelagert. Die neutralisierte Cellulose wurde so abgepreßt, daß ein Preßfaktor von 2,2 erreicht wurde. Die aktivierte Cellulose hatte folgende Werte: $\overline{DP}_W$ = 424, WRV = 107,7 %, Crl = 60 %, $E_H$ = 6,0 - 17,9 kJ/mol und $P_D$ = 1,88. Die aktivierte Cellulose wurde nach Beispiel 12 mit Harnstoff vermischt. Die Cellulosecarbamat-Synthese erfolgte während 2 Stunden bei 135 °C, ansonsten gemäß Beispiel 1.

Erhalten wurden 0,248 Gewichtsteile weißes Cellulosecarbamat mit einem $\overline{DP}_W$ von 369, einem Stickstoffgehalt von 2,8 Gew.% und einem relativen Löslichkeitsgrad von 5. Die alkalische Lösung dieses Produktes war durch folgende Werte gekennzeichnet: $\alpha$-Cellulosegehalt von 4,96 Gew.%, NaOH-Gehalt von 8,54 Gew.% NaOH, Viskosität bei 20 °C 8 Sekunden, Reifegrad 22,5° H und Filterwert $K_W$ = 304.

Beispiel 15

Der gemäß Beispiel 14 hergestellte, mit Harnstoff vermischte ALICELL-Zellstoff mit den Kennwerten des Beispiels 14 wurde bei 80 °C 18 Minuten vorgetrocknet, um einen Feuchtigkeitsgehalt von 40 Gew.% zu erreichen. Die Cellulosecarbamat-Synthese erfolgte ebenfalls wie in Beispiel 14.

Erhalten wurden 0,24 Gewichtsteile weißes Cellulosecarbamat mit einem $\overline{DP}_W$ von 319 und einem Stickstoffgehalt von 2,7 Gew.%, die einen relativen Löslichkeitsgrad von 5 hatten. Die alkalische Lösung des Produktes hatte folgende Kennwerte: $\alpha$-Cellulosegehalt 4,4 Gew.%, Gehalt an NaOH 8,5 Gew.%, Viskosität bei 20 °C 8 Sekunden, Reifegrad 16,5 °H, Filterwert $K_W$ = 592.

Beispiel 16

5,0 Gewichtsteile Ketchican-Zellstoff, charakterisiert wie in Beispiel 5, wurden nach Beispiel 1 aktiviert. Die aktivierte Cellulose mit $\overline{DP}_W$ = 370 wurde in einem Mischer unter den Bedingungen des Beispiels 1 mit 1,85 Gewichtsteilen Harnstoff in Wasser gemischt. Das Cellulose-Harstoff-Wasser-Gemisch wurde während 30 Stunden bei 40 °C bis auf einen Feuchte-Gehalt von 10,1 Gew.% vorgetrocknet und aschließend, wie im Beispiel 1 beschrieben, das restliche Wasser gegen o-Xylol ausgetauscht und das Gemisch zu Cellulosecarbamat synthetisiert.

Erhalten wurden 4,95 Gewichtsteile weißes Cellulosecarbamat mit $\overline{DP}_W$ = 328 und einem Stickstoffgehalt von 3,3 Gew.% das einen relativen Löslichkeitsgrad von 5 hatte. Die alkalische Lösung dieses Produktes wurde wie folgt charakterisiert: $\alpha$-Cellulosegehalt 7,90 Gew.%, NaOH-Gehalt 8,35 Gew.%, Viskosität bei 20 °C 64 Sekunden, Reifegrad 16 °H.

Beispiel 17

0,25 Gewichtsteile Ketchikan-Zellstoff mit den Kennwerten wie im Beispiel 5 wurden 1 Stunde bei 35 °C mit 18 Gew.%iger NaOH-Lösung alkalisiert. Die Alkalicellulose wurde so abgepreßt, daß ein Preßfaktor von 2,5 erreicht wurde. Danach wurde die Alkalicellulose 2 Stunden bei 25 - 40 °C zerkleinert. 0,64 Gewichtsteile der Alkalicellulose mit einem $\alpha$-Gellulosegehalt von 36,6 Gew.% und einem NaOH-Gehalt von 14,9 Gew.% wurden auf einer Nutsche mit Wasser NaOH-frei gewaschen. Danach wurden 0,75 Gewichtsteile nasser aktivierter Cellulose mit $\overline{DP}_W = 350$ und WRV = 85 % in einen Mischer überführt. Dazu gegeben wurden 0,01 Gewichtsteile Biuret als Aktivator, 1,85 Volumenteile Wasser und 0,6 Gewichtsteile Harnstoff. Die Vermischung erfolgte während 1 Stunde bei 40 °C. Diese Suspension wurde filtriert, und durch Abpressen wurden 0,6 Gewichtsteile feuchter Zellstoff erhalten, in den der Harnstoff eingebettet war. Diese Mischung wurde im Reaktor nach dem Beispiel 1 zu Cellulosecarbamat synthetisiert.

Erhalten wurden 0,23 Gewichtsteile weißes Cellulosecarbamat mit einem $\overline{DP}_W = 350$ und einem Stickstoffgehalt von 2,2 Gew.%, die einen relativen Löslichkeitsgrad von 4 bis 5 hatten.

Beispiel 18

0,25 Gewichtsteile Ketchikan-Zellstoff, charakterisiert wie in Beispiel 5, wurden nach Beispiel 17 alkalisiert und gewaschen. 0,73 Gewichtsteile nassen Zellstoffs mit $\overline{DP}_W = 490$ wurden 1 Stunde mit 0,55 Gewichtsteilen Harnstoff, 0,01 Gewichtsteilen Melamin und 1,9 Volumenteilen Wasser gemischt. Diese Suspension wurde filtriert und so abgepreßt, daß 0,6 Gewichtsteile Zellstoff, der mit Harnstoff vermischt war, erhalten wurden. Dieser Harnstoff-haltige Zellstoff wurde nach Beispiel 1 zu Cellulosecarbamat synthetisiert. Erhalten wurden 0,24 Gewichtsteile weißes Cellulosecarbamat, die einen $\overline{DP}_W$ von 340 und einen Stickstoffgehalt von 1,9 Gew.% hatten und einen relativen Löslichkeitsgrad im Bereich von 4 bis 5 aufwiesen.

Beispiel 19

0,2 Gewichtsteile Ketchikan-Zellstoff, charakterisiert wie in Beispiel 5, wurden nach Beispiel 17 alkalisiert und ausgewaschen. Es wurden 0,8 Gewichtsteile nasser aktivierter Cellulose mit $\overline{DP}_W = 301$ und $P_D = 2,46$ erhalten. Diese aktivierte Cellulose wurde 1 Stunde lang bei 40 °C mit 0,51 Gewichtsteilen Harnstoff, 0,2 Gewichtsteilen Guanidinkarbonat [(H$_2$N-C(NH)-NH$_2$)$_2$ • H$_2$CO$_3$] und 1,69 Volumenteilen Wasser vermischt. Diese Cellulosesuspension wurde filtriert, wobei 0,6 g des nassen Zellstoff-Harnstoff-Gemisches erhalten wurden, welche nach Beispiel 1 zu Cellulosecarbamat synthetisiert wurden. Die 0,23 Gewichtsteile des gewonnenen weißen Cellulosecarbamates mit einem $\overline{DP}_W$ von 344 und einem Stickstoffgehalt von 4,8 Gew.% hatten einen relativen Löslichkeitsgrad von 5.

Beispiel 20

0,2 Gewichtsteile Ketchikan-Zellstoff, charakterisiert wie in Beispiel 5, wurden zuerst zerkleinert und dann mit 4 Volumenteilen Wasser 16 Stunden bei 20 °C gemischt. Dann wurde die Suspension zur hydrothermischen Behandlung in einen Autoklaven überführt und 0,001 Gewichtsteile Bernsteinsäure zugegeben. Die hydrothermische Behandlung wurde 4 Stunden lang bei 150 °C durchgeführt. Danach wurde der Autoklav abgekühlt und die Cellulosesuspension auf einer Nutsche mit Wasser gewaschen. Die nasse aktivierte Cellulose mit $\overline{DP}_W = 313$, CrI = 72,1 %, WRV = 59,8 %, $E_H = 21,4$ kJ/mol und $P_D = 2,28$ wurde 1 Stunde lang bei 40 °C mit 0,51 Gewichtsteilen Harnstoff und Wasser vermischt, um 3,2 Gewichtsteile der Suspension zu erhalten. Die mit Harnstoff versetzte Cellulose wurde filtriert und abgepreßt. Es wurden 0,6 Gewichtsteile des Zellstoffes erhalten. Der nasse, mit Harnstoff versetzte Zellstoff wurde nach Beispiel 1 zu Cellulosecarbamat unter Verwendung von 3,2 Volumenteilen o-Xylol ($K_P$ 142-147 °C) 2 Stunden bei 145 °C synthetisiert. Das Produkt wurde wie in Beispiel 1 gereinigt.

Erhalten wurden 0,2 Gewichtsteile weißes Cellulosecarbamat mit $\overline{DP}_W = 319$ und einem Stickstoffgehalt von 1,5 Gew.%, das einen relativen Löslichkeitsgrad im Bereich von 3 bis 4 hatte. Die alkalische Lösung des Produktes wurde wie folgt charakterisiert: $\alpha$-Cellulosegehalt 5,3 Gew.%, NaOH-Gehalt 8,74 Gew.%, Viskosität bei 20 °C 245 Sekunden, Reifegrad 4 °H.

Beispiel 21

0,2 Gewichtsteile Ketchikan-Zellstoff, wie in Beispiel 5 charakterisiert, wurden nach Beispiel 20 vorbereitet. Die hydrothermische Behandlung erfolgte entsprechend Beispiel 20 bei Verwendung von 0,003 Gewichtsteilen Ameisensäure. Die aktivierte Cellulose wurde charakterisiert durch $\overline{DP}_W = 203$, CrI = 71,4 %, WRV = 61,1 %, $P_D = 2,09$. Die Synthese des Cellulosecarbamates wurde nach Beispiel 20 durchgeführt. Die erhaltenen 0,199 Gewichtsteile weißen Cellulosecarbamates mit $\overline{DP}_W = 184$ und einem Stickstoffgehalt von 1,15 Gew.% hatten einen im Bereich 3 bis 4 liegenden relativen Löslichkeitsgrad.

Beispiel 22

0,2 Gewichtsteile Ketchikan-Zellstoff mit den Eigenschaftskennwerten nach Beispiel 5 wurden entsprechend Beispiel 20 vorbereitet und unter Verwendung von 0,02 Gewichtsteilen Zitronensäure hydrothermisch behandelt. Die aktivierte Cellulose wurde durch folgende Werte charakterisiert: $\overline{DP}_W = 202$, CrI = 73,7 %, WRV = 64,1 %, $P_D = 2,1$ und $E_H = 12,8$ - 17,4 und 18,5 - 23,7 kJ/mol. Die Synthese des Cellulosecarbamates wurde wie in Beispiel 20 durchgeführt. Die 0,198 Gewichtsteile des erhaltenen weißen Cellulosecarbamates mit $\overline{DP}_W$ = 221 und einem Stickstoffgehalt von 2,2 Gew.% hatten einen relativen Löslichkeitsgrad von 3. Die alkalische Lösung des Produktes war charakterisiert durch α-Cellulosegehalt 4,65 Gew.%, NaOH-Gehalt 8,45 Gew.%, Reifegrad 4,5 °H und Filterwert $K_w$ = 557.

### Beispiel 23

0,2 Gewichtsteile Ketchikan-Zellstoff mit den Eigenschaftskennwerten nach Beispiel 5 wurden in Gegenwart von 0,005 Gewichtsteilen Zitronensäure entsprechend Beispiel 20 hydrothermisch behandelt und zu Cellulosecarbamat synthetisiert. Die erhaltenen 0,196 Gewichtsteile weißes Cellulosecarbamat mit $\overline{DP}_W$ = 197 und einem Stickstoffgehalt von 1,6 Gew.% hatten einen relativen Löslichkeitsgrad von 3.

### Beispiel 24

0,2 Gewichtsteile Ketchikan-Zellstoff, charakterisiert wie in Beispiel 5, wurden in Gegenwart von 0,006 Gewichtsteilen Schwefelsäure nach Beispiel 20 hydrothermisch behandelt. Die aktivierte Cellulose war durch $\overline{DP}_W$ = 258, Crl = 75,2 %, WRV = 69,1 %, $E_H$ = 13,9 - 16,8 und 18,5 - 19,7 kJ/mol und $P_D$ = 2,16 charakterisiert. Die Cellulosecarbamat-Synthese erfolgte nach Beispiel 20. Die 0,2 Gewichtsteile des erhaltenen weißen Cellulosecarbamates mit $\overline{DP}_W$ = 215 und einem Stickstoffgehalt von 1,5 Gew.% hatten einen relativen Löslichkeitsgrad von 3.

### Beispiel 25

0,2 Gewichtsteile Ketchikan-Zellstoff, charakterisiert wie in Beispiel 5, wurden in Gegenwart von 0,01 Gewichtsteilen Natriumacetat nach Beispiel 20 hydrothermisch aktiviert und zu Cellulosecarbamat synthetisiert. Die 0,2 Gewichtsteile des erhaltenen weißen Cellulosecarbamates mit $\overline{DP}_W$ = 639 und einem Stickstoffgehalt von 1,6 Gew.% hatten einen relativen Löslichkeitsgrad im Bereich von 2 bis 3.

### Beispiel 26

0,2 Gewichtsteile Ketchikan-Zellstoff, charakterisiert wie in Beispiel 5, wurden in Gegenwart von 0,001 Gewichtsteilen Kobaltacetat (Co $(CH_3COO)_2$ x $4H_2O$) hydrothermisch aktiviert nach Beispiel 20 und auch danach zu Cellulosecarbamat synthetisiert. Die aktivierte Cellulose war durch $\overline{DP}_W$ = 510, Crl = 70,8 %, WRV = 65 % und $P_D$ = 2,9 gekennzeichnet.

Die 0,19 Gewichtsteile des erhaltenen weißen Cellulosecarbamates hatten einen $\overline{DP}_W$ von 510, einen Stickstoffgehalt von 1,5 Gew.% und einen relativen Löslichkeitsgrad von 2.

### Beispiel 27

0,2 Gewichtsteile Ketchikan-Zellsoff, charakterisiert wie in Beispiel 5, wurden analog zu Beispiel 20 während 5 Stunden bei 150 °C in Gegenwart von 0,001 Gewichtsteilen Natriumperborat ($NaBO_3$x$4H_2O$) hydrothermisch aktiviert. Die Synthese des Cellulosecarbamates wurde gemäß Beispiel 20 durchgeführt. Die 0,198 Gewichtsteile des erhaltenen weißen Cellulosecarbamates hatten einen $\overline{DP}_W$ von 498, einen Stickstoffgehalt von 2,3 Gew.% und einen relativen Löslichkeitsgrad im Bereich von 3 bis 4.

### Beispiel 28

0,2 Gewichtsteile Ketchikan-Zellstoff, charakterisiert wie in Beispiel 5, wurden nach Beispiel 20 hydrothermisch aktiviert. 0,4 Gewichtsteile des aktivierten Zellstoffes, gekennzeichnet durch $\overline{DP}_W$ = 262, WRV = 74,5 %, Crl = 67,4 %, $P_D$ = 2,48 wurden während 1 Stunde bei 40 °C mit 0,51 Gewichtsteilen Harnstoff, 0,2 Gewichtsteilen Guanidinkarbonat [($H_2$N-C(NH)-$NH_2$)$_2$x$H_2CO_3$] und 2,1 Volumenteilen Wasser vermischt. Diese Mischung wurde filtriert und so abgepreßt, daß man 0,6 Gewichtsteile Produkt erhielt. Die Synthese zu Cellulosecarbamat wurde nach Beispiel 20 durchgeführt. Erhalten wurden 0,197 Gewichtsteile weißes Cellulosecarbamat mit $DP_W$ = 344, Stickstoffgehalt 4,8 Gew.% und relativem Löslichkeitsgrad von 3 bis 4.

### Beispiel 29

0,2 Gewichtsteile eines SWIECIE-Zellstoff, charakterisiert wie in Beispiel 4, wurden entsprechend Beispiel 20 bei 150 °C 2 Stunden in Gegenwart von 0,001 Gewichtsteilen Hydroxylaminsulfat hydrothermisch aktiviert. Der aktivierte Zellstoff war wie folgt charakterisiert: $\overline{DP}_W$ = 285, Crl = 66,2 %, WRV = 79,9 %, $P_D$ = 2,85 und $E_H$ = 8,0 - 21,4 kJ/mol. Das Vermischen mit Harnstoff und Synthetisieren des Cellulosecarbamates wurde nach Beispiel 20 durchgeführt.

Die 0,2 Gewichtsteile des erhaltenen weißen Cellulosecarbamates hatten einen $\overline{DP}_W$ von 227, einen Stickstoffgehalt von 1,6 Gew.% und einen relativen Löslichkeitsgrad im Bereich von 3 bis 4.

### Beispiel 30

0,2 Gewichtsteile eines SWIECIE Zellstoffs, charakterisiert wie in Beispiel 4, wurden entsprechend Beispiel 20 bei 150 °C 2 Stunden in Gegenwart von 0,001 Gewichtsteilen Ammoniumpersulfat hydrothermisch aktiviert. Der aktivierte Zellstoff war gekennzeichnet durch: $\overline{DP}_W$ = 290, Crl = 63,9 %, WRV = 77,6 %, $P_D$ = 2,09 und $E_H$ = 12,3 - 21,0 kJ/mol. Das Mischen mit Harnstoff und Synthetisieren des Cellulosecarbamates wurde entsprechend Beispiel 20 durchgeführt.

Die 0,199 Gewichtsteile des erhaltenen weißen Cellulosecarbamat hatten einen $\overline{DP}_W$ von 215, einen Stickstoffgehalt von 1,4 Gew.% und einen relativen Löslichkeitsgrad von 4.

Beispiel 31

0,2 Gewichtsteile Ketchikan-Zellstoff, charakterisiert wie in Beispiel 5, wurden in Gegenwart von 0,005 Gewichtsteilen Ammoniumpersulfat nach Beispiel 20 hydrothermisch aktiviert. Der aktivierte Zellstoff war gekennzeichnet durch $\overline{DP}_W$ = 343, Crl = 62,8 %, WRV = 63,3 %, $P_D$ = 2,84 und $E_H$ = 6,0 - 20,9 kJ/mol. Das Mischen mit Harnstoff und Synthetisieren des Cellulosecarbamates erfolgte gemäß Beispiel 20.

Die 0,197 Gewichtsteile des erhaltenen weißen Cellulosecarbamates hatten einen $\overline{DP}_W$ von 343, einen Stickstoffgehalt von 1,3 Gew.% und einen relativen Löslichkeitsgrad von 5. Die alkalische Lösung des Produktes hatte einen $\alpha$-Cellulosegehalt von 5,18 Gew.%, einen NaOH-Gehalt von 8,70 Gew.%, eine Viskosität bei 20 °C von 6 Sekunden, einen Reifegrad von 6 °H und einen Filterwert von $K_W$ = 358.

Beispiel 32

0,2 Gewichtsteile Ketchikan-Zellstoff, gekennzeichnet wie in Beispiel 5, wurden in Gegenwart von 0,003 Gewichtsteilen Ammoniumpersulfat nach Beispiel 20 hydrothermisch aktiviert. Der aktivierte Zellstoff war gekennzeichnet durch $\overline{DP}_W$ = 331, Crl = 71,7 %, $P_D$ = 2,51 und $E_H$ = 8,9 - 17,9 und 17,1 - 19,7 kJ/mol. Das Mischen mit Harnstoff wurde nach Beispiel 20 durchgeführt. Die Synthese des Cellulosecarbamates erfolgte bei 135 °C in 2 Stunden in einer Mischung von Xylol-Isomeren (Dichte 20/4 = 0,86 g/cm$^3$; Kp 166-169 °C) und ansonsten unter den Bedingungen des Beispiels 20.

Die 0,2 Gewichtsteile des erhaltenen weißen Cellulosecarbamates hatten einen $\overline{DP}_W$ von 289, einen Stickstoffgehalt von 0,9 Gew.% und einen relativen Löslichkeitsgrad zwischen 4 und 5.

Beispiel 33

0,2 Gewichtsteile Ketchikan-Zellstoff, gekennzeichnet wie in Beispiel 5, wurden in Gegenwart von 0,003 Gewichtsteilen Hydroxylaminsulfat wie in Beispiel 20 hydrothermisch aktiviert. Der aktivierte Zellstoff war wie folgt charakterisiert: $\overline{DP}_W$ = 325, Crl = 71,4 %, WRV = 78,1 %, $P_D$ = 2,44 und $E_H$ = 6,5 - 13,3 und 18,4 - 20,2 kJ/mol. Das Mischen mit Harnstoff und die Synthese des Cellulosecarbamates erfolgten nach Beispiel 20, wobei die Synthese in o-Xylol bei 145 °C während 2 Stunden durchgeführt wurde.

Die 0,195 Gewichtsteile des erhaltenen weißen Cellulosecarbamates hatten einen $\overline{DP}_W$ von 303, einen Stickstoffgehalt von 1,3 % und einen relativen Löslichkeitsgrad zwischen 3 und 4. Die alkalische Lösung des Produktes war gekennzeichnet durch $\alpha$-Cellulosegehalt 5,1 Gew.%, NaOH-Gehalt 8,69 Gew.%, Viskosität bei 20 °C von 5 Sekunden, Reifegrad 6,5 °H und Filterwert $K_W$ = 419.

Beispiel 34

0,2 Gewichtsteile Ketchikan-Zellstoff, wie in Beispiel 5 gekennzeichnet, wurden in Gegenwart von 0,003 Gewichtsteilen Hydroxylaminsulfat wie in Beispiel 20 hydrothermisch aktiviert. Die charakteristischen Kennwerte des aktivierten Zellstoffs entsprachen denen des Beispiels 33. Das Mischen mit Harnstoff und Synthetisieren des Cellulosecarbamates erfolgte nach Beispiel 20, wobei die Synthesezeit 4 Stunden und die Temperatur 145 °C betrug.

Die 0,198 Gewichtsteile des erhaltenen weißen Cellulosecarbamates mit einem $\overline{DP}_W$ von 307 und einem Stickstoffgehalt von 1,5 % hatten einen relativen Löslichkeitsgrad von 4.

Beispiel 35

3,8 Gewichtsteile Ketchikan-Zellstoff (aus Fichtenholz), mit folgenden Kennwerten: Feuchtigkeitsgehalt 8,5 %, $\overline{DP}_W$ = 577, Crl = 65,5 %, WRV = 65,0 % und $E_H$ = 17,3 - 24,2 kJ/mol, wurden mit 96,2 Gewichtsteilen demin. Wasser 10 Minuten bei 90 °C gemischt. Danach wurde die Cellulosesuspension mit einem Gehalt von 3,5 Gewichtsteilen (Trockengewicht) Cellulose in einen mit einem Rührer versehenen Reaktor überführt und 96,5 Gewichtsteile einer Lösung von Cellulasen, gewonnen aus einer Zucht Trichoderma reesei, mit einer CMC-Enzym-Aktivität von 2,5 E/ml und einer FPA-Aktivität von 0,15 E/ml in einem Säurepuffer mit pH = 4,8 hinzugegeben. Die enzymatische Behandlung wurde 6 Stunden bei 50 °C durchgeführt. Danach wurde die Cellulosedispersion filtriert und mit 90 °C warmen Wasser gewaschen. Im Ergebnis der enzymatischen Aktivierung wurde ein Zellstoff mit folgenden Werten erhalten: $\overline{DP}_W$ = 354, Crl = 68,3 %, WRV = 80,2 %, $E_H$ = 17,4 - 19,5 kJ/mol. 12,2 Gewichtsteile des nassen aktivierten Zellstoffes mit 72,2 Gew.% Wasser wurden nach Beispiel 1 mit Harnstoff gemischt. Es wurden 8,7 Gewichtsteile Harnstoff, gelöst in 33,5 Volumenteilen Wasser, eingesetzt. Der mit Harnstoff vermischte Zellstoff wurde filtriert und so abgepreßt, daß 10,2 Gewichtsteile Cellulose-Harnstoff-Mischung erhalten wurden. Die Synthese des Cellulosecarbamates wurde nach Beispiel 1 während 2 Stunden bei 145 °C durchgeführt.

Es wurden 3,3 Gewichtsteile Cellulosecarbamat erhalten. Das Produkt war weiß und hatte einen $\overline{DP}_W$ von 320, einen Stickstoffgehalt von 1,4 % und einen relativen Löslichkeitsgrad von 3 bis 4.

## Beispiel 36

3,8 Gewichtsteile Ketchikan-Zellstoff, gekennzeichnet wie in Beispiel 35, wurden mit 60,8 Gewichtsteilen demineralisiertem Wasser bei 20 °C 60 Minuten lang zerkleinert. Dann wurde die nasse Cellulose in einer Menge von von 3,5 Gewichtsteilen Cellulose (Trockengewicht) in einen mit einem Rührer versehenen Reaktor überführt und 96,5 Gewichtsteile einer Lösung von Cellulasen, gewonnen aus einer Zucht Trichoderma reesei, mit einer CMC-Enzym-Aktivität von 2,5 E/ml und einer FPA-Aktivität von 0,15 E/ml in einem Säurepuffer mit pH = 4,8 hinzugegeben. Die enzymatische Behandlung wurde 18 Stunden bei 50 °C durchgeführt. Als nächstes wurde die Cellulosedispersion filtriert und gewaschen, wie im Beispiel 35. Das Ergebnis der enzymatischen Aktivierung war ein aktivierter Zellstoff mit $\overline{DP}_W = 369$, CrI = 69,3 %, WRV = 83,1 %, $E_H$ = 17,1 - 18,1 kJ/mol.

10,4 Gewichtsteile des nassen aktivierten Zellstoffs mit einem Wassergehalt von 69,3 Gew.% wurden wie in Beispiel 1 mit Harnstoff vermischt, wobei 8,9 Gewichtsteile Harnstoff gelöst in 34,9 Volumenteilen Wasser eingesetzt wurden. Diese Zellstoffmischung wurde filtriert und bis auf 10,5 Gewichtsteile abgepreßt. Die Synthese des Cellulosecarbamates wurde nach Beispiel 1 bei 145 °C 2 Stunden lang durchgeführt.

Die 3,4 Gewichtsteile des erhaltenen weißen Cellulosecarbamates hatten einen $\overline{DP}_W$ von 393, einen Stickstoffgehalt von 2,2 % und einen relativen Löslichkeitsgrad von 4. Das Produkt war in wäßriger NaOH sehr gut löslich, wobei die Lösung wie folgt gekennzeichnet war: α-Cellulosegehalt 3,7 Gew.%, Viskosität 5 Sekunden, Reifegrad 7,5 °H, Filterwert $K_W$ 6101.

## Beispiel 37

5,5 Gewichtsteile Ketchikan-Zellstoff, charakterisiert wie in Beispiel 35, wurden 300 Minuten bei 50 °C gemahlen. Danach wurde die nasse Cellulose in einer Menge von 5,0 Gewichtsteilen (Trockengewicht) Cellulose in einen mit einem Rührer versehenen Reaktor überführt und 95,0 Gewichtsteile einer Lösung von Cellulasen, gewonnen aus einer Zucht Trichoderma reesei, mit einer CMC-Enzym-Aktivität von 1,8 E/ml und einer FPA-Aktivität von 0,10 E/ml in einem Säurepuffer mit pH = 4,8 hinzugegeben. Die enzymatische Behandlung erfolgte nach Beispiel 36. Danach wurde die Cellulosedispersion nach Beispiel 35 filtriert und gewaschen. Das Ergebnis der enzymatischen Aktivierung war ein aktivierter Zellstoff mit $\overline{DP}_W = 338$, CrI = 70,1 %, WRV = 78,5 %, $E_H$ = 17,3 - 18,1 kJ/mol. 15,8 Gewichtsteile des nassen aktivierten Zellstoffs mit 70,3 Gew.% Wasser wurden nach Beispiel 1 mit 12,0 Gewichtsteilen Harnstoff, die in 28 Volumenteilen Wasser gelöst waren, gemischt. Danach wurde filtriert und auf 14,1 Gewichtsteile des Cellulose-Harnstoff-Gemisches abgepreßt. Die Synthese des Cellulosecarbamates wurde entsprechend Beispiel 1 bei 145 °C während 2 Stunden durchgeführt. Die 4,6 Gewichtsteile des erhaltenen weißen Cellulosecarbamates hatten einen $\overline{DP}_W$ von 330, einen Stickstoffgehalt von 1,5 % und einen relativen Löslichkeitsgrad zwischen 3 und 4.

## Beispiel 38

3,8 Gewichtsteile Ketchikan-Zellstoff, charakterisiert wie in Beispiel 35, wurden hydrothermisch mit 66,2 Gewichtsteilen demineralisierten Wassers 30 Minuten bei 150 °C und 5 atm behandelt. Dann wurde die nasse Cellulose in einer Menge von 3,5 Gewichtsteilen (Trockengewicht) in einen Rührwerksreaktor überführt und 96,5 Gewichtsteile einer Lösung von Cellulasen, gewonnen aus einer Zucht Aspergillus niger, mit einer CMC-Enzym-Aktivität von 2,5 E/ml und einer FPA-Aktivität von 0,35 E/ml in einem Säurepuffer mit pH = 4,8 hinzugegeben. Die enzymatische Behandlung erfolgte 24 Stunden bei 50 °C. Danach wurde die Cellulosedispersion nach Beispiel 35 filtriert und gewaschen. Im Ergebnis der enzymatischen Aktivierung wurde ein Zellstoff mit folgenden Werten erhalten: $\overline{DP}_W = 392$, CrI = 69,3 %, WRV = 69,4 %, $E_H$ = 18,1 - 19,7 kJ/mol. 10,6 Gewichtsteile des nassen aktivierten Zellstoffes mit einem Wassergehalt von 68,9 Gew.% wurden nach Beispiel 1 mit 8,4 Gewichtsteilen Harnstoff, gelöst in 34,3 Volumenteilen Wasser, vermischt. Diese Cellulose-Harnstoff-Mischung wurde filtriert und auf 9,9 Gewichtsteile abgepreßt. Die Synthese des Cellulosecarbamates wurde nach Beispiel 1 während 2 Stunden bei 145 °C durchgeführt.

Die 3,3 Gewichtsteile des erhaltenen weißen Cellulosecarbamates hatten einen $\overline{DP}_W$ von 378, einen Stickstoffgehalt von 1,7 % und einen relativen Löslichkeitsgrad von 3 bis 4.

## Beispiel 39

3,8 Gewichtsteile Ketchikan-Zellstoff, charakterisiert wie in Beispiel 35, wurden hydrothermisch mit 66,2 Gewichtsteilen demineralisiertem Wasser 360 Minuten bei 150 °C und einem Druck von 5 atm behandelt. Dann wurde die nasse Cellulose in einer Menge von 3,5 Gewichtsteilen (Trockengewicht) in einen Rührwerksreaktor überführt und 96,5 Gewichtsteile einer Lösung von Cellulasen, gewonnen aus einer Zucht Aspergillus niger, mit einer CMC-Enzym-Aktivität von 2,5 E/ml und einer FPA-Aktivität von 0,35 E/ml in einem Säurepuffer mit pH = 4,8 hinzugegeben. Die enzymatische Behandlung erfolgte nach Beispiel 35, ebenso das Filtrieren und Waschen der Cellulosesuspension. Das Ergebnis der enzymatischen Aktivierung war ein aktivierter Zellstoff mit folgenden Werten: $\overline{DP}_W = 283$, CrI = 70,0 %, WRV = 69,0 %, $E_H$ = 17,2 - 18,9 kJ/mol. 11,9 Gewichtsteile der nassen aktivierten Cellulose mit einem Wassergehalt von 73,5 Gew.% wurden nach Beispiel 1 mit 8,7 Gewichtsteilen Harnstoff, gelöst in 33,5 Volumenteilen Wasser, vermischt. Diese Cellulose-Harnstoff-Mischung wurde filtriert und auf 10,2 Gewichtsteile abgepreßt. Die Synthese des Cellulosecarbamates erfolgte nach Beispiel 1 bei 145 °C während 2 Stunden. Die 3,0 Gewichtsteile des gewonnenen weißen Cellulosecarbamates hatten einen $\overline{DP}_W$ von 287, einen Stickstoffgehalt von 1,2 % und einen relativen Löslichkeitsgrad von 4.

Beispiel 40

3,8 Gewichtsteile Ketchikan-Zellstoff, gekennzeichnet wie in Beispiel 35, wurden hydrothermisch mit 66,2 Gewichtsteilen demineralisiertem Wasser 180 Min. bei 140 °C und einem Druck von 5 atm. behandelt. Dann wurde die nasse Cellulose in einer Menge von 3,5 Gewichtsteilen (Trockengewicht) in einen Rührwerksreaktor überführt und 96,5 Gewichtsteile einer Lösung von Cellulasen, gewonnen aus einer Zucht Aspergillus niger, mit einer CMC-Enzym-Aktivität von 1,8 E/ml und einer FPA-Aktivität von 0,25 E/ml in einem Säurepuffer mit pH = 4,8 hinzugegeben. Die enzymatische Behandlung wurde nach Beispiel 38 durchgeführt. Dann wurde die Cellulosedispersion nach Beispiel 35 filtriert und gewaschen. Das Ergebnis der enzymatischen Aktivierung war ein aktivierter Zellstoff mit folgenden Kennwerten: $\overline{DP}_W$ = 362, CrI = 71,0 %, WRV = 68,5 %, $E_H$ = 18,3 - 19,6 kJ/mol. Die 11,3 Gewichtsteile nasse aktivierte Cellulose mit einem Wassergehalt von 70,4 Gew.% wurden nach Beispiel 1 mit 8,4 Gewichtsteilen Harnstoff, gelöst in 34,6 Volumenteilen Wasser, vermischt. Danach wurde filtriert und auf 9,9 Gewichtsteile abgepreßt. Synthetisiert wurde das Cellulosecarbamat 2 Stunden bei 145 °C nach Beispiel 1.

Die 3,2 Gewichtsteile des erhaltenen weißen Cellulosecarbamates hatten einen $\overline{DP}_W$ von 314, einen Stickstoffgehalt von 1,5 % und einen relativen Löslichkeitsgrad von 3 bis 4.

Beispiel 41

3,8 Gewichtsteile Ketchikan-Zellstoff, charakterisiert wie in Beispiel 35, wurden hydrothermisch mit 57 Gewichtsteilen demineralisiertem Wasser und 0,006 Gewichtsteilen Perhydrol 360 Minuten bei 95 °C behandelt. Dann wurde die nasse Cellulose in einer Menge von 3,5 Gewichtsteilen (Trockengewicht) in einen Rührwerksreaktor überführt und 96,5 Gewichtsteile einer Lösung von Cellulasen, gewonnen aus einer Zucht Aspergillus niger, mit einer CMC-Enzym-Aktivität von 2,5 E/ml und einer FPA-Aktivität von 0,35 E/ml in einem Säurepuffer mit pH = 4,8 hinzugegeben. Die enzymatische Behandlung erfolgte nach Beispiel 35, ebenso das Filtrieren und Waschen der Cellulosedispersion. Im Ergebnis der enzymatischen Aktivierung wurde ein aktivierter Zellstoff mit folgenden Werten erhalten: $\overline{DP}_W$ = 468, CrI = 68,9 %, WRV = 73,8 %, $E_H$ = 17,8 - 19,5 kJ/mol. 11,9 Gewichtsteile nasse aktivierte Cellulose mit einem Wassergehalt von 71,6 Gew.% wurden nach Beispiel 1 mit 8,7 Gewichtsteilen Harnstoff, gelöst in 33,8 Volumenteilen Wasser, vermischt. Danach wurde filtriert und auf 10,2 Gewichtsteile abgepreßt. Die Synthese des Cellulosecarbamates erfolgte nach Beispiel 1 bei 145 °C während 2 Stunden.

Die 3,3 Gewichtsteile des erhaltenen weißen Cellulosecarbamates hatten einen $\overline{DP}_W$ von 415, einen Stickstoffgehalt von 1,4 % und einen relativen Löslichkeitsgrad von 3.

Beispiel 42

3,8 Gewichtsteile Ketchikan-Zellstoff, charakterisiert wie in Beispiel 35, wurden mit 57 Gewichtsteilen demineralisiertem Wasser und 0,6 Gewichtsteilen Perhydrol 10 Minuten bei 20 °C gemischt. Dann wurde die nasse Cellulose in einer Menge von 3,5 Gewichtsteile (Trockengewicht) in einen Rührwerksreaktor überführt und 96,5 Gewichtsteile einer Lösung von Cellulasen, gewonnen aus einer Zucht von Aspergillus niger, mit einer CMC-Enzym-Aktivität von 2,5 E/ml und einer FPA-Aktivität von 0,35 E/ml in einem Säurepuffer mit pH = 4,8 hinzugegeben. Die enzymatische Behandlung erfolgte nach Beispiel 36. Danach wurde die Cellulosesuspension nach Beispiel 35 filtriert und gewaschen. Das Ergebnis der enzymatischen Aktivierung war ein aktivierter Zellstoff mit folgenden Werten: $\overline{DP}_W$ = 437, CrI = 67,5 %, WRV = 78,2 %, $E_H$ = 18,1 - 19,8 kJ/mol. 11,1 Gewichtsteile nasse aktivierte Cellulose mit 69,9 Gew.% Wasser wurden nach Beispiel 1 mit 8,5 Gewichtsteilen Harnstoff, gelöst in 34,7 Volumenteilen Wasser, vermischt. Danach wurde filtriert und auf 10,0 Gewichtsteile abgepreßt. Die Synthese des Cellulosecarbamates wurde 2 Stunden bei 145 °C nach Beispiel 1 durchgeführt.

Die 3,3 Gewichtsteile des erhaltenen weißen Cellulosecarbamates hatten einen $\overline{DP}_W$ von 413, einen Stickstoffgehalt von 1,4 % und einen relativen Löslichkeitsgrad von 3.

Beispiel 43

3,8 Gewichtsteile Ketchikan-Zellstoff, charakterisiert wie in Beispiel 35, wurden wie in Beispiel 36 zerkleinert und dann hydrothermisch mit demineralisiertem Wasser bei 150 °C und einem Druck von 5 atm 60 Minuten behandelt. Dann wurde die nasse Cellulose in einer Menge von 3,5 Gewichtsteilen in einen Rührwerksreaktor überführt und 96,5 Gewichtsteile einer Lösung aus Cellulasen, gewonnen aus einer Zucht Trichoderma reesei, mit einer CMC-Enzym-Aktivität von 2,5 E/ml und einer FPA-Aktivität von 0,15 E/ml in einem Säurepuffer mit pH = 4,8 hinzugegeben. Die enzymatische Behandlung erfolgte wie in Beispiel 35, ebenso die Filtration und Wäsche der Cellulosesuspension. Im Ergebnis der enzymatischen Aktivierung wurde ein aktivierter Zellstoff mit folgenden Daten erhalten: $\overline{DP}_W$ = 300, CrI =

69,5 %, WRV = 87,1 %, $E_H$ = 16,0 - 17,1 kJ/mol.

10,9 Gewichtsteile der nassen aktivierten Cellulose mit 72,6 Gew.% Wasser wurden nach Beispiel 1 mit 7,6 Gewichtsteilen Harnstoff, gelöst in 35,5 Volumenteilen Wasser, vermischt. Danach wurde filtriert und auf 9,0 Gewichtsteile abgepreßt. Die Synthese des Cellulosecarbamates wurde nach Beispiel 1 bei 145 °C während 2 Stunden durchgeführt.

Die 3,0 Gewichtsteile des erhaltenen weißen Cellulosecarbamates hatten einen $\overline{DP}_W$ von 380, einen Stickstoffgehalt von 1,5 % und einen relativen Löslichkeitsgrad von 5. Das Cellulosecarbamat war in wäßriger NaOH gut löslich und diese Lösung durch folgende Werte charakterisiert: $\alpha$-Cellulosegehalt 4,15 Gew.%, Viskosität 5 Sekunden, Reifegrad 7,5 °H.

Beispiel 44

3,8 Gewichtsteile Ketchikan-Zellstoff, charakterisiert wie ein Beispiel 35, wurden mit demineralisiertem Wasser nach Beispiel 35 gemischt und wie in Beispiel 36 zerkleinert. Danach wurde die nasse Cellulose in einer Menge von 3,5 Gewichtsteilen (Trockengewicht) in einen Rührwerksreaktor überführt und 96,5 Gewichtsteile einer Lösung aus Cellulasen, gewonnen aus einer Zucht von Aspergillus niger, mit einer CMC-Enzym-Aktivität von 2,5 E/ml und einer FPA-Aktivität von 0,35 E/ml in einem Säurepuffer mit pH = 4,8 hinzugegeben. Die enzymatische Behandlung erfolgte wie in Beispiel 35, ebenso wie die Filtration und Wäsche der Cellulosesuspension. Das Ergebnis der enzymatischen Aktivierung war ein aktivierter Zellstoff mit $\overline{DP}_W$ = 356, Crl = 69,4 %, WRV = 80,7 %, $E_H$ = 18,1 - 19,2 kJ/mol.

11,1 Gewichtsteile der nassen aktivierten Cellulose mit einem Wassergehalt von 73,2 Gew.% wurden nach Beispiel 1 mit 7,6 Gewichtsteilen Harnstoff, gelöst in 35,3 Volumenteilen Wasser, vermischt. Diese Mischung wurde filtriert und auf 9,0 Gewichtsteile abgepreßt. Danach erfolgte die Synthese des Cellulosecarbamates nach Beispiel 1, während 2 Stunden bei 145 °C.

Die 3,0 Gewichtsteile des erhaltenen weißen Cellulosecarbamates hatten einen $\overline{DP}_W$ von 381, einen Stickstoffgehalt von 1,4 % und einen relativen Löslichkeitsgrad von 3.

Beispiel 45

5,5 Gewichtsteile Ketchikan-Zellstoff, charakterisiert wie in Beispiel 35, wurden nach Beispiel 36 zerkleinert und wie in Beispiel 42 mit demineralisiertem Wasser und Perhydrol bei 60 °C 60 Minuten gemischt. Dann wurde die nasse Cellulose in einer Menge von 5,0 Gewichtsteilen (Trockengewicht) in einen Rührwerksreaktor überführt und 95,0 Gewichtsteile einer Lösung aus Cellulasen, gewonnen aus einer Zucht Aspergillus niger, mit einer CMC-Enzym-Aktivität von 5,0 E/ml und einer FPA-Aktivität von 0,70 E/ml in einem Säurepuffer mit pH = 4,8 hinzugegeben. Die enzymatische Behandlung erfolgte wie in Beispiel 35, ebenso die Filtration und Wäsche der Cellulosesuspension. Das Ergebnis der enzymatischen Aktivierung war ein aktivierter Zellstoff mit $\overline{DP}_W$ = 338, Crl = 70,2 %, WRV = 74,5 %, $E_H$ = 17,5 - 18,3 kJ/mol. 15,7 Gewichtsteile der nassen aktivierten Cellulose mit einem Wassergehalt von 69,2 Gew.% wurden nach Beispiel 1, mit 12,2 Gewichtsteilen Harnstoff, gelöst in 27,9 Volumenteilen Wasser, vermischt. Diese Mischung wurde filtriert und auf 14,4 Gewichtsteile abgepreßt. Die Cellulosecarbamat-Synthese erfolgte nach Beispiel 1 während 2 Stunden bei 145°C.

Die 4,7 Gewichtsteile des erhaltenen weißen Cellulosecarbamates hatten einen $\overline{DP}_W$ von 322, einem Stickstoffgehalt von 1,7 % und einen relativen Löslichkeitsgrad von 4.

Beispiel 46

3,8 Gewichtsteile Ketchikan-Zellstoff, charakterisiert wie in Beispiel 35, wurden nach Beispiel 45 mit demineralisiertem Wasser und Perhydrol vermischt und dann nach Beispiel 36 zerkleinert. Dann wurde die nasse Cellulose in einer Menge von 3,5 Gewichtsteilen (Trockengewicht) in einem Rührwerksreaktor überführt und 96,5 Gewichtsteile einer Lösung von Cellulasen, gewonnen aus einer Zucht Trichoderma reesei, mit einer CMC-Enzym-Aktivität von 5,0 E/ml und einer FPA-Aktivität von 0,30 E/ml in einem Säurepuffer mit pH = 4,8 hinzugegeben. Die enzymatische Behandlung erfolgte wie in Beispiel 35, ebenso die Filtration und Wäsche der Cellulosesuspension. Das Ergebnis der enzymatischen Aktivierung war ein aktivierter Zellstoff mit $\overline{DP}_W$ = 363, Crl = 68,9 %, WRV = 75,0 %, $E_H$ = 17,8 - 18,1 kJ/mol.

10,9 Gewichtsteile der nassen aktivierten Cellulose mit einem Wassergehalt von 70,8 Gew.% wurden nach Beispiel 1 mit 8,2 Gewichtsteilen Harnstoff, gelöst in 35,1 Volumenteilen Wasser, vermischt. Diese Mischung wurde filtriert und auf 9,6 Gewichtsteile abgepreßt. Die Synthese des Cellulosecarbamates erfolgte nach Beispiel 1 während 2 Stunden bei 145 °C. Die 3,1 Gewichtsteile des erhaltenen weißen Cellulosecarbamates hatten einen $\overline{DP}_W$ von 330, einen Stickstoffgehalt von 1,4 % und einen relativen Löslichkeitsgrad von 4.

Beispiel 47

3,8 Gewichtsteile Ketchikan-Zellstoff, charakterisiert wie in Beispiel 35, wurden nach Beispiel 36 zerkleinert, dann nach Beispiel 43 mit demineralisiertem Wasser hydrothermisch behandelt und schließlich wie in Beispiel 45 mit demineralisiertem Wasser und Perhydrol gemischt. Danach wurde die nasse Zellulose in einer Menge von 3,5 Gewichtsteilen (Trockengewicht) in einem Rührwerksreaktor überführt und 96,5 Gewichtsteile einer Lösung von Cellulasen, gewonnen aus einer Zucht von Trichoderma reesei, mit einer CMC-Enzym-Aktivität von 2,5 E/ml und einer FPA-Aktivität von 0,15 E/ml in einem Säurepuffer mit pH = 4,8 hinzugegeben. Die enzymatische Behandlung, Filtration und das Waschen der Cellulosesuspension erfolgte nach Beispiel 35. Das Ergebnis der enzymatischen Aktivierung war ein aktivierter Zellstoff mit $\overline{DP}_W$ = 301, CrI = 68,7 %, WRV = 73,9 %, $E_H$ = 17,1 - 18,2 kJ/mol.

11,6 Gewichtsteile der nassen aktivierten Cellulose mit einem Wassergehalt von 71,9 Gew.% wurden nach Beispiel 1 mit 8,3 Gewichtsteilen Harnstoff, gelöst in 34,7 Volumenteilen Wasser, vermischt. Diese Mischung wurde filtriert und auf 9,8 Gewichtsteile abgepreßt. Die Synthese des Cellulosecarbamates wurde wie in Beispiel 1 während 2 Stunden bei 145 °C durchgeführt.

Die 3,2 Gewichtsteile des erhaltenen weißen Cellulosecarbamates hatten einen $\overline{DP}_W$ von 298, einen Stickstoffgehalt von 1,9 % und einen relativen Löslichkeitsgrad zwischen 4 und 5.

**Patentansprüche**

1.  Verfahren zur Herstellung von Cellulosecarbamat durch die Reaktion von Harnstoff mit Cellulose in flüssiger Phase dadurch gekennzeichnet, daß hoch reaktiver Zellstoff durch eine vorhergehende Aktivierung hergestellt wird, dann Harnstoff in wäßriger Lösung in die aktivierte Cellulose eingemischt wird bei einer Temperatur von 20 bis 60 °C während einer Zeit von 10 Minuten bis 6 Stunden, mit einem Molverhältnis von Harnstoff zu Anhydroglucoseeinheit von 0,25 : 1 bis 3 : 1, danach wahlweise ein Teil des Wassers durch Trocknung bei atmosphären- und/oder vermindertem Druck bei einer Temperatur im Bereich von 20 bis 100 °C verdampft wird, und das verbleibende Wasser durch ein flüssiges organisches Medium, wie Toluol, o-Xylol, p-Xylol, Pseudocumol, Tetralin oder Dekalin ausgetauscht wird, und die Reaktion der aktivierten Cellulose mit dem Harnstoff in dem flüssigen organischen Medium bei einer Temperatur von 80 bis 180 °C während einer Zeit von 10 Minuten bis 10 Stunden durchgeführt wird, danach das Reaktionsprodukt vom flüssigen Medium abgetrennt wird und mit einem niederen Alkohol und/oder warmem und kaltem Wasser ausgewaschen wird, und das restliche flüssige organische Medium mit Dampf abgestrippt wird, und das erhaltene Cellulosecarbamat wahlweise getrocknet wird.

2.  Verfahren nach Anspruch 1, dadurch gekennzeichnet, daß die Aktivierung des Zellstoffes durch alkalische Aktivierung unter Verwendung einer 10- bis 20 Gew.%igen wäßrigen Lösung von Natriumhydroxid während einer Zeit von 10 Minuten bis 10 Stunden, bei einer Temperatur von 10 bis 60 °C und nachfolgender Vorreife während einer Zeit von 10 Minuten bis 30 Stunden bei einer Temperatur von 20 bis 80 °C erfolgt, und danach der Natriumhydroxidüberschuß bis zu einem Natriumhydroxidgehalt in der Cellulose von unter 5 Gew.% ausgewaschen und/oder neutralisiert wird, wobei vor, während oder nach der Neutralisation oder nach der Wäsche 0,001 bis 10 Gew.% eines Aktivators, bezogen auf Cellulose, dem aktivierten Zellstoff hinzugefügt werden.

3.  Verfahren nach Anspruch 2, dadurch gekennzeichnet, daß der alkalisch aktivierte, wahlweise ausgewaschene Zellstoff durch organische und/oder anorganische Säuren wie Essig-, Ameisen-, Propion-, Oxal-, Schwefel-, Salz- oder Salpetersäure in Form von Lösungen, Emulsionen und/oder Dispersionen neutralisiert wird.

4.  Verfahren nach Anspruch 2, dadurch gekennzeichnet, daß der alkalisch aktivierte, wahlweise ausgewaschene Zellstoff durch organische und/oder anorganische Säureanhydride, wie Essigsäureanhydrid, Kohlendioxid, Schwefeldioxid oder Stickstoffdioxid, neutralisiert wird.

5.  Verfahren nach einem der Ansprüche 2 bis 4, dadurch gekennzeichnet, daß der Aktivator eine stickstoffhaltige organische Verbindung, wie Biuret, Melamin, Guanidin und/oder deren Salze, ist.

6.  Verfahren nach einem der Ansprüche 2 bis 4, dadurch gekennzeichnet, daß der Aktivator ein Salz einer organischen und/oder anorganischen Säure, wie Natriumacetat, Natriumformiat, Natriumpropionat, Natriumsulfat, Natriumchlorid, Natriumnitrat oder Natriumkarbonat, ist.

7.  Das Verfahren nach Anspruch 1, dadurch gekennzeichnet, daß die Aktivierung des Zellstoffes durch hydrothermische Aktivierung in Gegenwart von Katalysatoren während einer Zeit von 0,5 bis 10 Stunden bei einer Temperatur von 120 bis 160 °C, unter einem Druck bis zu 5 bar und bei einem Gewichtsverhältnis von Cellulose zu Wasser von 1 : 10 bis 1 : 60 erfolgt.

8.  Verfahren nach Anspruch 7, dadurch gekennzeichnet, daß der Katalysator eine organische und/oder anorganische Säure, wie Bernstein-, Zitronen-, Ameisen-, Essig-, Propion- oder Schwefelsäure in Form einer Lösung, Dispersion und/oder Emulsion in einer Konzentration von 0,001 bis 0,1 Gew.%, bezogen auf Cellulose, ist.

9.  Das Verfahren nach Anspruch 7, dadurch gekennzeichnet, daß der Katalysator ein Salz, wie Kobaltacetat, Zinkacetat, Ammoniumpersulfat, Kobaltsulfat, Ammoniumacetat oder Hydroxylaminsulfat in Form einer Lösung, Dispersion und/oder Emulsion in einer Konzentration von 0,001 bis 5,0 Gew.%, bezogen auf Cellulose, ist.

10. Verfahren nach Anspruch 1, dadurch gekennzeichnet, daß der Zellstoff mechanisch und/oder hydrothermisch und/oder durch Bleichen vorbehandelt wird, danach der vorbehandelte Zellstoff durch Enzyme, wie Cellulasen und/oder Hemicellulasen, bei einer Temperatur von 20 bis 60 °C während einer Zeit von 1 Minute bis 48 Stunden enzymatisch aktiviert wird, statisch und/oder dynamisch, mit einer Cellulosekonzentration im Bereich von 0,1 bis 20 Gew.% in der behandelten Lösung, und anschließend die enzymatische Lösung ausgewaschen wird und die restlichen Enzyme durch Erhitzen auf eine Temperatur von 80 bis 90 °C deaktiviert werden.

11. Verfahren nach Anspruch 10, dadurch gekennzeichnet, daß die mechanische Vorbehandlung des Zellstoffs durch Mischen, Zerkleinerung oder Mahlen in Wasser während einer Zeit von 10 Minuten bis 5 Stunden bei Temperaturen von 20 bis 90 °C erfolgt.

12. Verfahren nach Anspruch 10, dadurch gekennzeichnet, daß die hydrothermische Vorbehandlung des Zellstoffs in Gegenwart von Wasser während einer Zeit von 10 Minuten bis 6 Stunden bei einer Temperatur von 100 bis 150 °C, einem Druck von bis zu 5 bar und einem Gewichtsverhältnis Cellulose zu Wasser von 1 : 5 bis 1 : 100 erfolgt.

13. Verfahren nach Anspruch 10, dadurch gekennzeichnet, daß das Bleichen des Zellstoffs unter Verwendung von Wasserstoffperoxid bei einer Konzentration von 0,1 bis 10 g/l und einer Temperatur von 20 - 95 °C während einer Zeit von 10 Minuten bis 6 Stunden erfolgt, und der so vorbehandelte Zellstoff danach ausgewaschen wird.

14. Verfahren nach einem der Ansprüche 10 bis 13, dadurch gekennzeichnet, daß die verwendeten Enzyme Cellulasen sind, die aus Aspergillus niger oder Trichoderma reesei gewonnen wurden und eine CMC-Aktivität im Bereich von 0,1 bis 30 E/ml, eine FPA-Aktivität im Bereich von 0,01 bis 5 E/ml haben, und ein Aktivitätsverhältnis von CMC zu FPA im Bereich von 1 bis 100 aufweisen.

15. Verfahren nach einem der Ansprüche 10 bis 13, dadurch gekennzeichnet, daß die verwendeten Enzyme Hemicellulasen mit einer Aktivität von 0,1 bis 50 E/ml sind.

16. Verfahren nach einem der Ansprüche 10 bis 13, dadurch gekennzeichnet, daß die verwendeten Enzyme eine Mischung von Cellulasen und Hemicellulasen im Gewichtsverhältnis von 1 : 0,1 bis 1 : 10 sind.

17. Verfahren nach einem der Ansprüche 1 bis 16, dadurch gekennzeichnet, daß die vorhergehende Aktivierung des Zellstoffs aktivierten Zellstoff mit einer kontrollierten Reaktivität gegenüber Harnstoff und einer kontrollierten Polydispersität von weniger als 2,7 ergibt.